# EUROPEAN PATENT APPLICATION

(11) **EP 4 478 296 A1**
(43) Date of publication of application: **18.12.2024**
(21) Application number: 23762717.9
(22) Date of filing: 10.02.2023
(51) Int. Cl.: G06T 17/00

(54) **SPACE INDICATION METHOD AND COMMUNICATION DEVICE**

(30) Priority: 04.03.2022 CN 202210209838
(71) Applicant: Huawei Technologies Co., Ltd., Shenzhen, Guangdong 518129 (CN)
(72) Inventor: MA, Mengyao, Shenzhen, Guangdong 518129 (CN); TANG, Zihan, Shenzhen, Guangdong 518129 (CN); LI, Jiahui, Shenzhen, Guangdong 518129 (CN); XIE, Junwen, Shenzhen, Guangdong 518129 (CN); MA, Jianglei, Shenzhen, Guangdong 518129 (CN)
(74) Representative: Gill Jennings & Every LLP
(86) International application number: PCT/CN2023/075508
(87) International publication number: WO 2023/165316

(57) **Abstract**

Embodiments of this application provide a space indication method and a communication apparatus, and relate to the field of communication technologies. A first communication apparatus receives first indication information from a second communication apparatus, where the first indication information includes structure information of first sensing space, and the structure information of the first sensing space includes first information indicating a first tree structure of the first sensing space; determines the tree structure of the first sensing space based on the first indication information; determines feedback information based on the tree structure of the first sensing space, where the feedback information indicates status information sensed by the first communication apparatus in the first sensing space or status information sensed by the first communication apparatus outside the first sensing space; and sends the feedback information to the second communication apparatus. In this application, structure information of sensing space can be more accurately described by using a tree structure.

## Description

### CROSS-REFERENCE TO RELATED APPLICATIONS

This application claims priority to Chinese Patent Application No. 202210209838.6, filed with the China National Intellectual Property Administration on March 4, 2022 and entitled "SPACE INDICATION METHOD AND COMMUNICATION APPARATUS", which is incorporated herein by reference in its entirety.

### TECHNICAL FIELD

Embodiments of this application relate to the field of communication technologies, and in particular, to a space indication method and a communication apparatus.

### BACKGROUND

With increasingly rich application scenarios of wireless communication, next-generation wireless communication may be oriented to more new scenarios, such as sensing, imaging, and environment reconstruction. For example, in environment reconstruction, a plurality of devices (sensors) may sense or observe a same environment from different perspectives and directions, the plurality of devices may send sensing data to a base station (a central server), and the base station may fuse the sensing data into a complete environment map to achieve more refined environment reconstruction.

Sensing data collected by different devices for a same environment overlaps, and a spatial correlation may be used to reduce transmission overheads. To be specific, the devices may not transmit an overlapping region, or use a rough sensing feedback (a high compression ratio) for the overlapping region. However, it is quite challenging to make the devices distinguish between an overlapping region and a non-overlapping region.

A direct method is to define sensing space based on an origin of a coordinate system, for example, define sensing space presented as a cube/sphere/cone by agreeing on a sensing distance, a sensing viewing-angle range, and the like. However, sensing space in a complex environment may be irregular space. Consequently, it is difficult to describe the sensing space in the complex environment in such a manner.

### SUMMARY

This application provides a space indication method and a communication apparatus, to improve description accuracy of sensing space.

According to a first aspect, this application provides a space indication method. The method includes:
A second communication apparatus determines first sensing space; and sends first indication information to a first communication apparatus, where the first indication information includes structure information of the first sensing space, and the structure information of the first sensing space includes first information indicating a first tree structure of the first sensing space. Correspondingly, the first communication apparatus receives the first indication information from the second communication apparatus; determines feedback information based on the tree structure of the first sensing space, where the tree structure of the first sensing space is determined based on the first indication information, and the feedback information indicates status information sensed by the first communication apparatus in the first sensing space or status information sensed by the first communication apparatus outside the first sensing space; and sends the feedback information to the second communication apparatus. Correspondingly, the second communication apparatus receives the feedback information.

The space indication method can be applied to different communication systems, for example, a 5th generation (5th generation, 5G) mobile communication system, a new radio (new radio, NR) system, and a long term evolution (long term evolution, LTE) system. This is not listed one by one in this application. The second communication apparatus may be a network device, a transmission and reception point (transmission reception point, TRP), a gNodeB (gNodeB, gNB) in 5G, a chip in these devices, a terminal with a strong data processing capability, or the like. This is not specifically limited in this application. The first communication apparatus may be a sensing device, an internet of things device, a terminal, a small cell, or the like. This is not specifically limited in this application.

In this application, the structure information of the first sensing space is indicated by using the first tree structure, and sensing space in more shapes rather than only sensing space in a regular shape (for example, a cube/sphere/cone) can be described, so that sensing space is described more refinedly. In addition, the status information that is in or outside the first sensing space and that needs to be sensed by the first communication apparatus is indicated by using the first indication information. This can reduce feedback overheads of the device, and reduce power consumption of the device.

In an optional manner, the second communication apparatus sends second indication information to the first communication apparatus, where the second indication information includes feedback configuration information of the first sensing space, and the feedback configuration information includes at least one of the following: a sensing level of the feedback information, a compression level of the feedback information, and a transmission protection level of the feedback information. Correspondingly, the first communication apparatus receives the second indication information, and feeds back the feedback information based on the second indication information.

The feedback configuration information may be directly indicated by using an index, or may be indicated by using a specific value, for example, a value directly indicating the sensing level. This is not specifically limited in this application.

In this application, the feedback configuration information of the first sensing space is indicated by using the second indication information, and the feedback information is fed back based on the feedback configuration information. In such a manner, a device capability or a channel state condition of the first communication apparatus, and a data volume and data accuracy of the feedback information in or outside the first sensing space that is currently learned by the second communication apparatus are fully considered, so that the data accuracy or a data transmission protection level can be adjusted, a data processing amount of the first communication apparatus can be further reduced, and accuracy or integrity of data fused by the second communication device can be ensured.

In an optional manner, the feedback configuration information is indicated by using a second tree structure, and the second tree structure is a sub-structure of the first tree structure.

In this application, the feedback configuration information may be better indicated by using the tree structure, and the feedback configuration information indicated by using the tree structure is more accurate. For example, a first region of the first sensing space is sensed by using a sensing level 1, and a second region of the first sensing space is sensed by using a sensing level 2. In addition, in this application, the second tree structure is the sub-structure of the first tree structure. If the structure information of the first sensing space has been indicated by using the first tree structure, the first tree structure may be reused when the feedback configuration information is indicated by using the second tree structure. This can further reduce indication overheads of the second indication information, reduce consumption of processing resources of the second communication apparatus, and avoid reconstructing a new tree structure.

In an optional manner, the second communication apparatus sends third indication information to the first communication apparatus. Correspondingly, the first communication apparatus receives the third indication information, where the third indication information includes adjustment information, and the adjustment information indicates structure information of second sensing space; and the adjustment information includes at least one of the following:
structure information of the second sensing space added relative to that of the first sensing space, and structure information of the second sensing space deleted relative to that of the first sensing space.

In this application, the structure information of the second sensing space may be indicated based on the third indication information, and the third indication information indicates the structure information of the second sensing space adjusted relative to that of the first sensing space, instead of directly indicating the structure information of the second sensing space. In such a manner, the structure information of the first sensing space can be reused, and indication overheads of the second sensing space can be reduced.

In an optional manner, the first tree structure includes one of the following:
an equally divided X-tree or an unequally divided X-tree, where X is a positive integer greater than or equal to 2; and
the unequally divided X-tree incompletely equally divides space into X regions, and the equally divided X-tree equally divides space into X regions.

When the sensing space or the feedback configuration information is indicated by using the tree structure, the equally divided X-tree or the unequally divided X-tree may be used. The equally divided X-tree may be used to equally divide space into a plurality of regions, and the unequally divided X-tree may be used to incompletely equally divide space into a plurality of regions. In such a manner, an X-tree can be flexibly selected to construct a tree structure, to describe a structure of sensing space and other information more refinedly.

In an optional manner, the first tree structure is the unequally divided X-tree, and the first indication information further includes second information indicating a division point of the unequally divided X-tree.

It should be noted that when the first tree structure is the unequally divided X-tree, the division point of the unequally divided X-tree is indicated, so that the first tree structure is reconstructed more accurately.

In an optional manner, X is 2, 4, 8, or 16.

In this application, for ease of calculation, X may be set to 2, 4, 8, or 16. However, in actual application, a value of X may not be limited.

In an optional manner, the second communication apparatus sends fourth indication information to the first communication apparatus, where the fourth indication information includes a type of the first sensing space, and the type of the first sensing space is sensing space that has been detected by the second communication apparatus or sensing space that has not been detected by the second communication apparatus. Correspondingly, the first communication apparatus receives the fourth indication information, and determines the type of the first sensing space based on the fourth indication information.

It should be noted that the type of first sensing space specifically indicated by the fourth indication information may be determined based on a requirement of the second communication apparatus. Whether the first communication apparatus feeds back the status information sensed in the first sensing space or the status information sensed outside the first sensing space can be learned by using the fourth indication information. In such a manner, a sensing range of the first communication apparatus can be clearly learned.

In an optional manner, the second communication apparatus sends fifth indication information to the first communication apparatus, where the fifth indication information includes one of the following: a traversal manner of the first tree structure and a coding mode of the first information. Correspondingly, the first communication apparatus receives the fifth indication information.

The traversal manner of the first tree structure can be learned by using the fifth indication information, to learn how to arrange nodes of the tree structure. The coding mode of the first information can be further learned by using the fifth indication information, to accurately decode the first information. A reconstruction manner and coding efficiency of the first tree structure can be flexibly adjusted by using the fifth indication information.

In an optional manner, the second communication apparatus sends sixth indication information to the first communication apparatus, where the sixth indication information includes an indication manner of the first tree structure, and the indication manner is a complete indication or a partial indication. Correspondingly, the first communication apparatus receives the sixth indication information, and determines the indication manner of the first tree structure based on the sixth indication information.

Whether the indication manner of the first tree structure is a complete indication or a partial indication can be learned by using the sixth indication information. The second communication apparatus delivers the sixth indication information to reduce indication overheads of sensing space, and improve data processing efficiency.

In an optional manner, when the indication manner is the partial indication, the first tree structure includes α nodes, the α nodes include Y first nodes and Z second nodes, all subnodes of the first node need to be fed back, and at least one of subnodes of the second node does not need to be fed back, where α, Y, and Z are integers, and Y+Z is less than or equal to α; and
the first information includes third information indicating the first node or the second node in the α nodes, a node value of the Z second nodes, and a node value of a subnode of the Z second nodes.

Such a manner can reduce indication overheads of sensing space, and improve data processing efficiency.

In an optional manner, the second communication apparatus sends seventh indication information to the first communication apparatus, where the seventh indication information includes depth information of the first tree structure. Correspondingly, the first communication apparatus receives the seventh indication information, and determines the depth information of the first tree structure based on the seventh indication information.

To obtain more accurate space description, a tree structure may be continuously divided, and more branches indicate a deeper depth of the tree structure. Different devices have different data processing capabilities. A depth of the first tree structure is indicated by using the seventh indication information, so that accuracy of the space description can be flexibly adjusted, efficiency of restoring the structure information of the first tree structure by the first communication apparatus can be improved, and a data processing capability can be improved.

In an optional manner, the second communication apparatus sends eighth indication information to the first communication apparatus, where the eighth indication information includes a spatial region of the first sensing space, and the spatial region of the first sensing space includes contour information of the first tree structure. Correspondingly, the first communication apparatus receives the eighth indication information, and determines the spatial region of the first sensing space based on the eighth indication information.

A specific location and a spatial region, in physical space, of the tree structure of the first sensing space can be learned by using the spatial region of the first sensing space, to restore the first tree structure more accurately.

In an optional manner, before the second communication apparatus determines the first sensing space, the first communication apparatus feeds back contour information of an observation region to the second communication apparatus. Correspondingly, the second communication apparatus receives the contour information that is of the observation region and that is fed back by the first communication apparatus, and determines the first sensing space of the first communication apparatus based on the contour information that is of the observation region and that is fed back by the first communication apparatus.

The second communication apparatus may perform data analysis based on the contour information that is of the observable region and that is fed back by the first communication apparatus, and determine the first sensing space of the first communication apparatus. Such a manner improves description accuracy of the first sensing space, and reduces the data processing amount and the feedback overheads of the first communication apparatus.

The first indication information to the eighth indication information may be carried in a same message, or may be carried in different messages. This is not specifically limited in this application.

According to a second aspect, an embodiment of this application provides a communication apparatus. The communication apparatus may be a first communication apparatus (or a second communication apparatus) or a chip disposed in the first communication apparatus (or a chip disposed in the second communication apparatus). The communication apparatus has functions of implementing the first aspect. For example, the communication apparatus includes corresponding modules, units, or means (means) for performing the steps in the first aspect. The functions, units, or means may be implemented by using software or hardware, or may be implemented by hardware executing corresponding software.

In a possible design, the communication apparatus includes a processing unit and a transceiver unit. The transceiver unit may be configured to send and receive signals, to implement communication between the communication apparatus and another apparatus. For example, the transceiver unit is configured to receive configuration information from a terminal device. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to send and receive signals, and the processor executes program instructions, to complete the method in any possible design or implementation of the first aspect. The communication apparatus may further include one or more memories. The memory is configured to be coupled to the processor, and the memory may store a necessary computer program or instructions for implementing functions in any possible design or implementation of the first aspect. The processor may execute the computer program or instructions stored in the memory. When the computer program or the instructions are executed, the communication apparatus is enabled to implement the method in any possible design or implementation of the first aspect.

In still another possible design, the communication apparatus includes a processor. The processor may be configured to be coupled to a memory. The memory may store a necessary computer program or instructions for implementing functions in any possible design or implementation of the first aspect. The processor may execute the computer program or instructions stored in the memory. When the computer program or the instructions are executed, the communication apparatus is enabled to implement the method in any possible design or implementation of the first aspect.

In yet another possible design, the communication apparatus includes a processor and an interface circuit. The processor is configured to: communicate with another apparatus through the interface circuit, and perform the method in any possible design or implementation of the first aspect.

It can be understood that in the second aspect, the processor may be implemented by using hardware or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. In addition, there may be one or more processors and one or more memories. The memory may be integrated with the processor, or the memory and the processor are disposed separately. In a specific implementation process, the memory and the processor may be integrated into a same chip, or may be disposed on different chips. A type of the memory and a manner in which the memory and the processor are disposed are not limited in embodiments of this application.

According to a third aspect, an embodiment of this application provides a communication system. The communication system includes the first communication apparatus and the second communication apparatus in the first aspect.

According to a fourth aspect, this application provides a chip system. The chip system includes a processor, and may further include a memory, configured to implement the method in any possible design of the first aspect. The chip system may include a chip, or may include a chip and another discrete device.

According to a fifth aspect, this application further provides a computer-readable storage medium. The computer-readable storage medium stores computer-readable instructions. When the computer-readable instructions are run on a computer, the computer is enabled to perform the method in any possible design of the first aspect.

According to a sixth aspect, this application provides a computer program product including instructions. When the computer program product is run on a computer, the computer is enabled to perform the method in various embodiments of the first aspect.

For technical effects that can be achieved in the second aspect to the sixth aspect, refer to descriptions of the technical effects that can be achieved in the corresponding possible design solutions in the first aspect. Details are not described herein again in this application.

### BRIEF DESCRIPTION OF DRAWINGS

FIG. 1 is a diagram of a communication system according to an embodiment of this application;
FIG. 2 is a schematic flowchart of a space indication method according to an embodiment of this application;
FIG. 3 is a diagram of a type of sensing space;
FIG. 4 is a diagram of an unequally divided binary tree;
FIG. 5 is a diagram of an unequally divided quadtree;
FIG. 6 is a diagram of an equally divided quadtree;
FIG. 7 is a diagram of a structure of a type of sensing space;
FIG. 8 is a diagram of a structure of another type of sensing space;
FIG. 9 is a diagram of a tree structure by using a partial indication;
FIG. 10 is a diagram of a hierarchical indication of sensing space;
FIG. 11 is a diagram of a structure of a CL tree;
FIG. 12 is a diagram of a structure of another CL tree;
FIG. 13 is a diagram of a structure of a communication apparatus according to an embodiment of this application;
FIG. 14 is a diagram of a structure of another communication apparatus according to an embodiment of this application; and
FIG. 15 is a diagram of a structure of still another communication apparatus according to an embodiment of this application.

### DESCRIPTION OF EMBODIMENTS

To make the objectives, technical solutions, and advantages of this application clearer, the following further describes this application in detail with reference to accompanying drawings. A specific operation method in a method embodiment can also be applied to apparatus embodiments or a system embodiment. In descriptions of this application, unless otherwise specified, "a plurality of" means two or more than two. Therefore, for implementations of apparatuses and a method, refer to each other. Repeated parts are not described again.

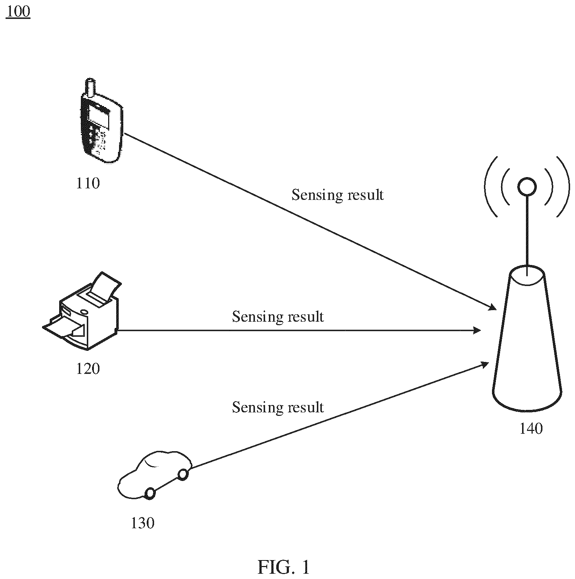

As shown in FIG. 1, a communication system 100 to which an embodiment of this application can be applied includes a first communication apparatus and a second communication apparatus. The first communication apparatus may include a mobile phone 110, a printer 120, and a vehicle 130 in FIG. 1. Certainly, in actual application, the first communication apparatus may be alternatively another device. Only the mobile phone, the printer, and the vehicle are used as examples for description in FIG. 1. The second communication device is a network device 140, or certainly may be a terminal device with a strong data processing capability. The network device may be a base station, may be a device obtained through integration of a base station and a base station controller, may be another device having a similar communication function, or may be a data processing center or the like. This is not specifically limited in this application. FIG. 1 is merely an example for description, and a specific device type of the second communication apparatus is not specifically limited.

The mobile phone 110, the printer 120, and the vehicle 130 may send sensing results (for example, sensing results such as imaging, positioning, tracking, recognition, 3D mapping, reconstruction, or environment reconstruction) obtained through sensing of sensing space to the network device 140 for fusion, to help the network device obtain more complete or more accurate information about the sensing space.

In addition, it should also be noted that a plurality of network devices may be included. The mobile phone 110 may send a sensing result 1 to a network device 1 that serves the mobile phone 110, the printer 120 may send a sensing result 2 to a network device 2 that serves the printer 120, and the vehicle 130 may send a sensing result 3 to a network device 3 that serves the vehicle 130. Then, the network device 1 may send the sensing result 1 to the network device 140, the network device 2 may send the sensing result 2 to the network device 140, the network device 3 may send the sensing result 3 to the network device 140, and the network device 140 performs data fusion.

The network device is an apparatus that is deployed in a radio access network to provide a wireless communication function for a terminal device. The access network device is a device with wireless sending and receiving functions or a chip that can be disposed in the device. The device includes but is not limited to: a base station (base station, BS), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or an access point (access point, AP), a wireless relay node, a wireless backhaul node, or a transmission point (transmission and reception point, TRP, or transmission point, TP) in an ultra-wideband (ultra wide band, UWB) communication system or a wireless fidelity (wireless fidelity, Wi-Fi) system. Alternatively, the device may be a gNB or a transmission point (TRP or TP) in a 5G (for example, NR) system, one or a group of antenna panels (including a plurality of antenna panels) of a gNB in a 5G system, or a network node that forms a gNB or a transmission point, for example, a baseband unit (BBU), a distributed unit (distributed unit, DU), a satellite, an uncrewed aerial vehicle, a vehicle, or a mobile phone; a terminal device that performs a network device function in an internet of vehicles, device-to-device (device-to-device, D2D) communication, or machine-to-machine/machine type communication (machine-to-machine/machine-type communications, M2M/MTC); or various types of base stations in a future communication system.

In some deployments, the gNB may include a central unit (centralized unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, while the DU implements functions of a radio link control (radio link control, RLC) layer, a media access control (media access control, MAC) layer, and a physical (physical, PHY) layer. Information at the RRC layer finally becomes information at the PHY layer (that is, the information sent through the PHY layer) or is transformed from information at the PHY layer. Therefore, in such an architecture, it may be considered that higher layer signaling such as RRC layer signaling or PDCP layer signaling is sent by the DU or is sent by the DU and the RU. It can be understood that the access network device may be a CU node, a DU node, or a device including a CU node and a DU node. In addition, the CU may be classified as a network device in an access network, for example, a radio access network (radio access network, RAN), or the CU may be classified as a network device in a core network CN. This is not limited herein.

A sensing device in this embodiment of this application may also be referred to as a terminal, is an entity on a user side configured to receive or transmit a signal, and is configured to send an uplink signal to the network device, or receive a downlink signal from the network device. The sensing device includes a device that provides voice and/or data connectivity for a user, for example, may include a handheld device with a wireless connection function or a processing device connected to a wireless modem. The sensing device may communicate with a core network over a RAN, and exchange a voice and/or data with the RAN. The terminal device may include user equipment (user equipment, UE), a vehicle to x (vehicle to x, V2X) terminal device, a wireless terminal device, a mobile terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), a wearable device, a vehicle-mounted device, an uncrewed aerial vehicle, a small cell, or the like.

By way of example rather than limitation, in this embodiment of this application, the sensing device may be a wearable device. The wearable device may also be referred to as a wearable smart device, a smart wearable device, or the like, and is a generic term for wearable devices that are intelligently designed and developed for everyday wear by applying a wearable technology, for example, glasses, gloves, watches, clothes, and shoes. The wearable device is a portable device that is directly worn on a body or integrated into clothes or an accessory of a user. The wearable device is not only a hardware device, but also implements powerful functions through software support, data exchange, and cloud interaction. Generalized wearable smart devices include full-featured and large-size devices that can implement complete or partial functions without relying on smartphones, for example, a smartwatch or smart glasses; and include devices that are specialized in only one type of application function and that need to be used cooperatively with other devices such as a smartphone, for example, various smart bands, smart helmets, or smart jewelry for monitoring physical signs.

If the various sensing devices described above are located in a vehicle (for example, placed in the vehicle or installed in the vehicle), the sensing devices may be all considered as vehicle-mounted terminal devices. For example, the vehicle-mounted terminal devices are also referred to as on-board units (on-board units, OBUs).

The technical solutions in this application can be applied to various communication systems, for example, a 5G system, an NR system, an LTE system, a universal mobile telecommunications system (universal mobile telecommunication system, UMTS), a mobile communication system (for example, a 6G mobile communication system) evolved from a 5G network, a V2X communication system, a D2D communication system, a wireless local area network (wireless local area network, WLAN) communication system, or a UWB communication system.

In descriptions of embodiments of this application, "and/or" describes an association relationship for describing associated objects and represents that three relationships may exist. For example, A and/or B may represent the following three cases: Only A exists, both A and B exist, and only B exists. A character "/" generally indicates an "or" relationship between associated objects. In this application, "at least one" means one or more, and "a plurality of" means two or more. In addition, it should be understood that in the descriptions of this application, terms such as "first" and "second" are merely used for differential descriptions, but should not be understood as an indication or an implication of relative importance and should not be understood as an indication or an implication of a sequence.

As described in the background, it is difficult to describe a complex environment in a manner of defining sensing space based on an origin of a coordinate system. In view of this, this application provides a space indication method to improve description accuracy of sensing space.

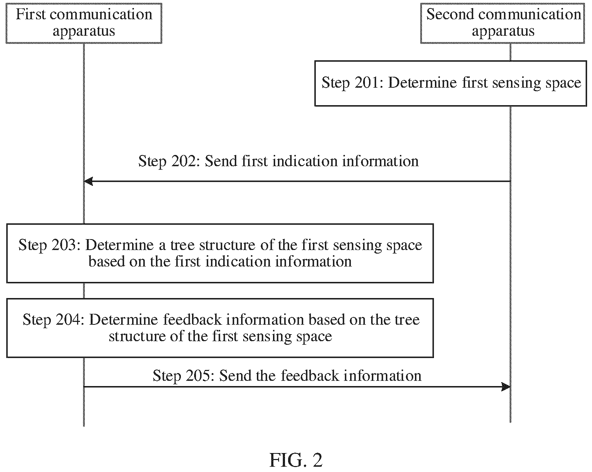

The space indication method provided in this application may be performed by the first communication apparatus or the second communication apparatus, or can be applied to the communication system in FIG. 1 and is implemented through interaction between the first communication apparatus and the second communication apparatus. This is not specifically limited in this application. In actual application, there may be a plurality of first communication apparatuses and a plurality of second communication apparatuses. This is not specifically limited in this application. In FIG. 2, interaction between one first communication apparatus and one second communication apparatus is used as an example to describe the solutions of this application. The method is performed as follows.

Step 201: The second communication apparatus determines first sensing space.

It should be noted that the first sensing space may be determined by the second communication apparatus depending on an actual requirement. For example, if a user is to obtain an imaging status of space 1, the second communication apparatus may determine the space 1 as the first sensing space. If the user is to obtain an imaging status of space other than the space 1, the second communication apparatus may also determine the space 1 as the first sensing space. Alternatively, the first sensing space may be determined by the second communication apparatus based on actual sensible space of the first communication apparatus. For example, the first communication apparatus can sense the space 1, but the second communication apparatus has learned a status of space 1.1 in the space 1. In this case, space that is in the space 1 and that is other than the space 1.1 may be used as the first sensing space, or the space 1.1 may be used as the first sensing space.

Optionally, the first communication apparatus may feed back contour information of an observation region to the second communication apparatus. Correspondingly, the second communication apparatus receives the contour information that is of the observation region and that is fed back by the first communication apparatus, and determines the first sensing space of the first communication apparatus based on the contour information that is of the observation region and that is fed back by the first communication apparatus. For example, the first communication apparatus feeds back contour information (a regular shape, for example, a cube, a sphere, or a cone) of an observation region 1 to the second communication apparatus, and the second communication apparatus determines the first sensing space based on the contour information of the observation region 1 and a user requirement. It is assumed that the user requirement is to obtain an imaging status of an observation region 2, and there is an overlapping region between the observation region 2 and the observation region 1. When a region that can be observed by the first communication apparatus is the observation region 1, the second communication apparatus may determine the overlapping region as the first sensing space of the first communication apparatus, or may determine an observation region 1 that is in the observation region 1 and that is other than the overlapping region as the first sensing space.

The second communication apparatus performs data analysis based on the contour information that is of the observable region and that is fed back by the first communication apparatus, and determines the first sensing space of the first communication apparatus. Such a manner can improve description accuracy of the first sensing space, reduce a data processing amount and feedback overheads of the first communication apparatus, and improve data processing efficiency.

Step 202: The second communication apparatus sends first indication information to the first communication apparatus, where the first indication information includes structure information of the first sensing space, and the structure information of the first sensing space includes first information indicating a first tree structure of the first sensing space.

Correspondingly, the first communication apparatus receives the first indication information from the second communication apparatus. The first indication information may be sent in a broadcast, unicast, or multicast manner, and this is not specifically limited in this application. The first indication information may be transmitted at a MAC layer, a PHY layer, or an RRC layer, and this is not specifically limited in this application.

It should be noted that structure information of sensing space may be described by using information about a regular shape. For example, the structure information of the first sensing space is described by using an origin, a side length, and the like. However, it is difficult to describe irregular sensing space by using information about a regular shape. In this application, the structure information of the first sensing space is indicated by using the tree structure, the sensing space can be described more flexibly by using the tree structure, and not only sensing space in a regular shape can be described.

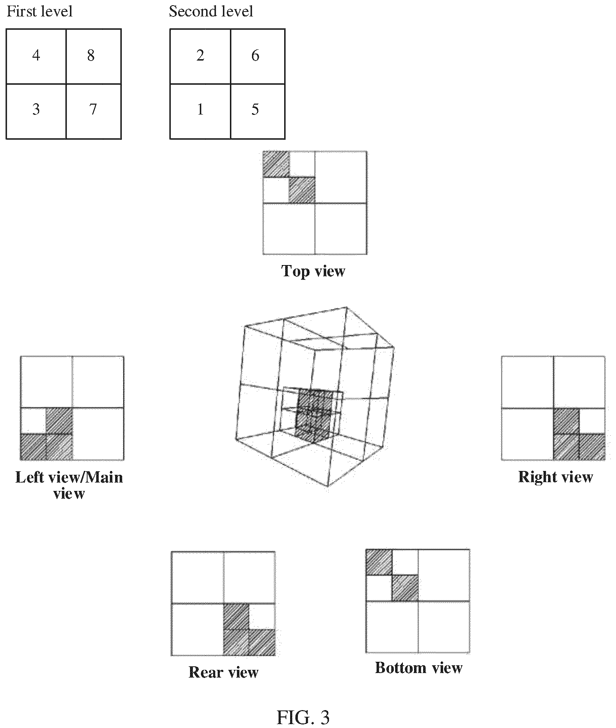

A tree structure can be understood as follows: Specific space is equally divided or unequally divided into a plurality of parts, and then space structures of the space parts obtained through division are separately indicated by using numerical identifiers. As shown in FIG. 3, a cube is equally divided into eight parts, and a second cube in the eight small cubes includes the first sensing space. In this case, the second small cube may be marked as 1, other small cubes may be marked as 0, and division of the cube may be represented by 00000010. Then, the second small cube marked as 1 is equally divided into eight parts, three sub-cubes (a second sub-cube, a fifth sub-cube, and a seventh sub-cube) including the first sensing space (that is, a part shown by shadow in FIG. 3) are marked as 1, and other sub-cubes are marked as 0. In this case, the first sensing space is located in space indicated by the second sub-cube, the fifth sub-cube, and the seventh sub-cube that are divided from the second small cube, and division of the second small cube may be represented by 01010010. Data information, that is, 0000001001010010, can be understood as the first information indicating the first tree structure of the first sensing space. FIG. 3 further shows different views of the cube, to more clearly determine the structure information of the first sensing space, and a sequence of numbering small cubes at a first level and a sequence of numbering small cubes at a second level when the cube is overlooked.

Optionally, the first tree structure may include one of the following: an equally divided X-tree or an unequally divided X-tree, where X is a positive integer greater than or equal to 2. The unequally divided X-tree incompletely equally divides space into X regions, and the equally divided X-tree equally divides space into X regions. X may be 2, 4, 8, or 16. This is not specifically limited in this application. The first tree structure is the unequally divided X-tree, and the first indication information further includes second information indicating a division point of the unequally divided X-tree.

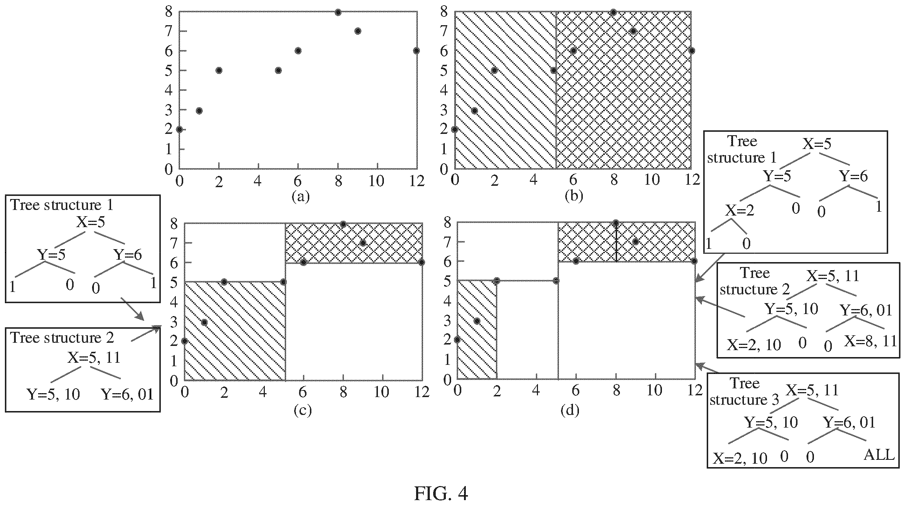

For better illustration, the unequally divided X-tree may be illustrated by using a two-dimensional plan view (that is, coordinates including only an X-axis and a Y-axis). However, in actual application, the first sensing space may be three-dimensional space (that is, coordinates including an X-axis, a Y-axis, and a Z-axis). FIG. 4 is described by using an unequally divided binary tree as an example. As shown in (a) in FIG. 4, initial space has eight information points, and coordinates of the eight information points are (0, 2), (1, 3), (2, 5), (5, 5), (6, 6), (8, 8), (9, 7), and (12, 6), respectively. The initial space is divided into two parts along a direction perpendicular to an X-axis. For example, a division point is x=5, space corresponding to x≤5 is shadow space, space corresponding to x>5 is grid space, and space obtained through division is shown in (b) in FIG. 4. Then, each of the two space parts obtained in (b) in FIG. 4 is divided into two parts along a Y-axis. For example, the shadow space is divided along y=5, and the grid space is divided along y=6. As shown in (c) in FIG. 4, for a better indication of space in (c) in FIG. 4, four bits may be used for indication. A value of a first bit is 1, representing shadow space corresponding to x≤5 and y≤5; a value of a second bit is 0, representing white space corresponding to x≤5 and y>5; a value of a third bit is 0, representing white space corresponding to x>5 and y≤5; and a value of a fourth bit is 1, representing grid space corresponding to x>5 and y>5. Tree structures corresponding to (c) in FIG. 4 may be represented as a tree structure 1 and a tree structure 2. The tree structure 1 is a three-level tree whose depth is 2. A first level shows a division point X=5 for space division for the first time. A second level shows two division points Y=5 and Y=6 for space division for the second time. A third level shows bit values 10 corresponding to space obtained through division by using the division points X=5 and Y=5, and bit values 01 corresponding to space obtained through division by using the division points X=5 and Y=6. The tree structure 2 is a two-level tree whose depth is 1. A first level shows the division point X=5 for space division for the first time and bit values 11 corresponding to space obtained through division. A second level shows the division point Y=5 for space division for the second time and bit values 10 corresponding to space obtained through division, and the division point Y=6 for space division for the second time and bit values 01 corresponding to space obtained through division.

The space shown by (c) in FIG. 4 is further divided to obtain space shown by (d) in FIG. 4. A division point is X=2, six bits may be used for indication. A value of a first bit is 1, representing shadow space corresponding to x≤2 and y≤5; a value of a second bit is 0, representing white space corresponding to 2<x≤5 and y≤5; a value of a third bit is 0, representing white space corresponding to x≤5 and y>5; a value of a fourth bit is 0, representing white space corresponding to x>5 and y≤6; a value of a fifth bit is 1, representing grid space corresponding to 5<x≤8 and y>6; and a value of a sixth bit is 1, representing grid space corresponding to x>8 and y>6. Tree structures corresponding to (d) in FIG. 4 may be represented as a tree structure 1, a tree structure 2, and a tree structure 3. The tree structure 1 is a four-level tree whose depth is 3. A first level shows a division point X=5 for space division for the first time. A second level shows two division points Y=5 and Y=6 for space division for the second time. A third level shows a bit value 0 corresponding to space obtained through division by using the division points X=2 and Y=5, and bit values 01 corresponding to space obtained through division by using Y=6. A fourth level shows bit values 10 corresponding to space obtained through division by using X=2. Two space parts obtained through division by using a division point X=8 are both corresponding to a bit value 1, and therefore are not shown herein. The tree structure 2 is a three-level tree whose depth is 2. A first level shows the division point X=5 for space division for the first time and bit values 11 corresponding to space obtained through division. A second level shows the division point Y=5 for space division for the second time and bit values 10 corresponding to space obtained through division, and the division point Y=6 for space division for the second time and bit values 01 corresponding to space obtained through division. A third level shows the division point X=2 for space division for the third time and bit values 10 corresponding to space obtained through division, a bit values 0 corresponding to space obtained through division by using Y=5, a bit value 0 corresponding to space obtained through division by using Y=6, and the division point X=8 for space division for the third time and bit values 11 corresponding to space obtained through division. The tree structure 3 is a three-level tree whose depth is 2. A first level shows the division point X=5 for space division for the first time and bit values 11 corresponding to space obtained through division. A second level shows the division point Y=5 for space division for the second time and bit values 10 corresponding to space obtained through division, and the division point Y=6 for space division for the second time and bit values 01 corresponding to space obtained through division. A third level shows the division point X=2 for space division for the third time and bit values 10 corresponding to space obtained through division, a bit values 0 corresponding to space obtained through division by using Y=5, a bit value 0 corresponding to space obtained through division by using Y=6, and the division point X=8 for space division for the third time and bit values 11 corresponding to space obtained through division. Herein, the division point X=8 and the bit values 11 corresponding to space obtained through division are represented by a special character ALL. If bit values corresponding to space obtained through division are all 1 (the space is full and does not need to be further divided), a special character may be used for indication in this case, and a specific division point and bit values 11 do not need to be specified.

It should be noted that the unequally divided binary tree is divided along a direction perpendicular to an X-axis or a Y-axis. However, in actual application, when space is three-dimensional space, the space may be divided along a direction perpendicular to an X-axis, a Y-axis, or a Z-axis, or may be divided into two parts according to another rule, for example, divided along a direction at an angle of 45 degrees with the X-axis.

The unequally divided X-tree represents sensing space. Indication information of a division point for each division, that is, the second information, needs to be added compared with the equally divided X-tree. Because the unequally divided X-tree is used to perform unequal division on space, a location of each division point needs to be indicated. For example, in (c) in FIG. 4, first information indicating structure information of the two-level tree may be represented in binary: {{X=5, 11}, {Y=5, 10}, {Y=6, 01}}, and in (d) in FIG. 4, first information indicating structure information of the three-level tree may be represented in binary: { {X=5, 11}, {Y=5, 10}, {Y=6, 01}, {X=2, 10}, {X=8, 11}}. Alternatively, a special character, for example, "ALL", may be used to indicate that subspace is full and is not further divided. For example, in (d) in FIG. 4, first information indicating structure information of the three-level tree may be represented in binary: {{X=5, 11}, {Y=5, 10}, {Y=6, 01}, {X=2, 10}, {ALL}}. In other words, the second information is used as a part of the first information to indicate structure information of a tree structure.

Alternatively, information about division points (that is, the second information) may be separately indicated. For example, in (c) in FIG. 4, structure information of the two-level tree may be {X=5, Y=5, Y=6}+{ 11, 10, 01}, and in (d) in FIG. 4, structure information of the three-level tree may be {X=5, Y=5, Y=6, X=2, X=8}+{11, 10, 01, 10, 11}.

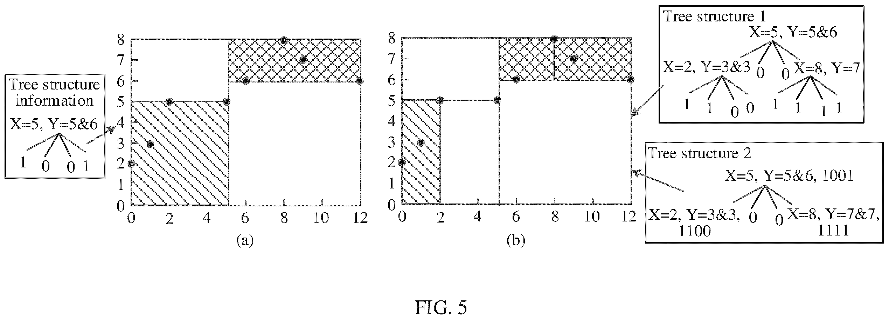

In the following FIG. 5, a one-level unequally divided quadtree and a two-level unequally divided quadtree are used as an example. In comparison with an unequally divided binary tree, division points for obtaining four subspace parts need to be indicated for a quadtree at a time. For example, in a division manner, division is first performed along a direction perpendicular to an X-axis, and then performed along a direction perpendicular to a Y-axis (twice). Therefore, values of division points on the X-axis and the Y-axis need to be separately indicated. Further, the values of the division points for division along the Y-axis twice may be identical or different. If the two values are different, the values of the two division points on the Y-axis need to be indicated. In FIG. 5 (a), first information indicating structure information of the one-level quadtree may be represented in binary: {X=5, Y=5&6, 1001}. Division is further performed along the direction perpendicular to the X-axis, to obtain a spatial region shown in (b) in FIG. 5, and first information indicating structure information of the two-level quadtree may be represented in binary: { {X=5, Y=5&6, 1001}, {X=2, Y=3&3, 1100}, {X=8, Y=7&7, 1111}}.

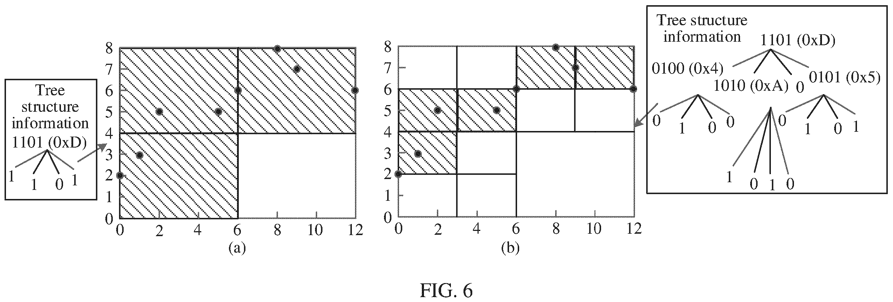

For comparison, FIG. 6 uses an equally divided quadtree as an example for description. A space division situation is as follows. In (a) in FIG. 6, first information indicating structure information of one-level quadtree may be represented in binary: {1101}. In (b) in FIG. 6, first information indicating structure information of two-level quadtree may be represented in binary: { {1101}, {0100}, {1010}, {0101}}, or may be represented in hexadecimal: { {D}, {4}, {A}, {5}}. Because the equally divided X-tree is evenly divided each time, a location of a division point or a division manner does not need to be indicated.

In addition, it should also be noted that, whether the first sensing space is specifically represented by using an equally divided X-tree or an unequally divided X-tree may be determined depending on an actual situation. Certainly, in actual application, the first sensing space may be first equally divided into a plurality of parts, and then unequal division is performed to obtain a plurality of parts; or the first sensing space may be first unequally divided into a plurality of parts, and then equal division is performed to obtain a plurality of parts. This is not limited in this application. For example, after the first sensing space is equally divided into two subspace parts, one subspace part is unequally divided into four space parts, and the other subspace part is equally divided into eight space parts. Alternatively, a combination of a binary tree, a quadtree, and a 16-tree may be used to represent the sensing space. A specific manner of dividing the sensing space may be determined depending on an actual situation. This is not limited in this application.

Step 203: The first communication apparatus determines the tree structure of the first sensing space based on the first indication information.

Step 204: The first communication apparatus determines feedback information based on the tree structure of the first sensing space, where the feedback information indicates status information sensed by the first communication apparatus in the first sensing space or status information sensed by the first communication apparatus outside the first sensing space.

It should be noted that the first communication apparatus and the second communication apparatus usually agree in advance or agree, by using a communication protocol, on the status information that is sensed in or outside the first sensing space and that needs to be sensed. For example, if it is agreed to feed back the status information in the first sensing space, the status information in the first sensing space is fed back; or if it is agreed to feed back the status information outside the first sensing space, the status information outside the first sensing space is fed back.

The status information may be imaging information, sensing information, positioning information, environment reconstruction information, or the like in or outside the first sensing space. This is not specifically limited in this application.

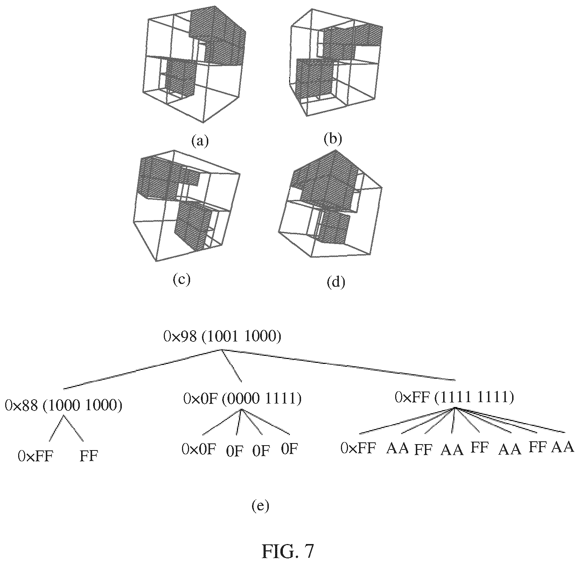

FIG. 7 shows a type of sensing space (that is, regions shown by dark-color images in FIG. 7). The sensing space is sensing space OS (observed space) that has been fully detected by the second communication apparatus, (a) in FIG. 7 shows a view of a cube, (b) in FIG. 7 shows another view of the cube, (c) in FIG. 7 shows still another view of the cube, and (d) in FIG. 7 shows yet another view of the cube.

Space shown by the cube is divided into eight subspace parts (that is, sub-cubes), and eight bits are respectively used to indicate the eight subspace parts. 1 indicates "yes" (subspace has been fully detected, and is shown by using a dark color in FIG. 7), and 0 indicates "no" (subspace has not been fully detected). The subspace that has been fully detected may be further divided into eight smaller subspace parts, and so on, until a maximum quantity of division times (that is, a depth of a first tree structure, for example, if the cube is divided twice, the depth of the first tree structure may be 1, and a quantity of levels may be 2; or if the cube is divided three times, the depth of the first tree structure may be 2, and a quantity of levels may be 3) is reached. Generally, if a depth of a tree structure is A, the tree structure has A+1 levels. For example, if the depth of the first tree structure is 2, the first tree structure has three levels.

The first tree structure corresponding to the sensing space shown in FIG. 7 is shown in (e) in FIG. 7. (e) in FIG. 7 shows an identification manner of the first tree structure, which is represented by using hexadecimal bits and binary bits. Content in brackets is represented by using binary bits. For simplified representation, 0xFF...FF in the figure represents eight "0xFF"s.

Because the sensing space shown in FIG. 7 has been fully detected by the second communication apparatus, the second communication apparatus may notify, in a unicast/multicast/broadcast manner, one or more first communication apparatuses that the sensing space shown in FIG. 7 is the sensing space that has been fully detected by the second communication apparatus. When reporting the feedback information, the first communication apparatus may correspondingly reduce/delete sensing data in the sensing space shown in FIG. 7, to reduce feedback overheads. The first communication apparatus may further feed back status information sensed outside the sensing space shown in FIG. 7.

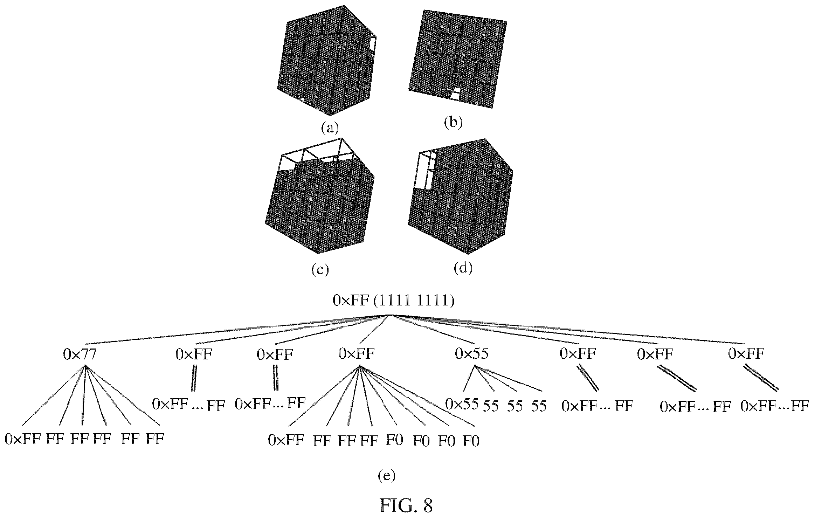

Correspondingly, FIG. 8 shows another type of sensing space. The sensing space is dual space of the sensing space shown in FIG. 7, and the sensing space is sensing space NOS (non observed space) that has not been fully detected by the second communication apparatus, (a) in FIG. 8 shows a view of a cube, (b) in FIG. 8 shows another view of the cube, (c) in FIG. 8 shows still another view of the cube, and (d) in FIG. 8 shows yet another view of the cube. Dark-color mark parts of the cube in FIG. 8 and the dark-color mark parts of the cube in FIG. 7 may form a complete cube.

Space shown by the cube is divided into eight subspace parts (that is, sub-cubes), and eight bits are respectively used to indicate the eight subspace parts. 1 indicates "no" (subspace has not been fully detected, and is shown by using a dark color in FIG. 8), and 0 indicates "yes" (subspace has been fully detected). The subspace that has not been fully detected may be further divided into eight smaller subspace parts, and so on, until a maximum quantity of division times is reached.

A first tree structure corresponding to the sensing space shown in FIG. 8 is shown in (e) in FIG. 8. (e) in FIG. 8 shows an identification manner of the first tree structure, which is represented by using hexadecimal bits and binary bits. Content in brackets is represented by using binary bits. For simplified representation, 0xFF...FF in the figure represents eight "0xFF"s.

Because the sensing space shown in FIG. 8 has not been fully detected by the second communication apparatus, the second communication apparatus may notify, in a unicast/multicast/broadcast manner, one or more first communication apparatuses that the sensing space shown in FIG. 8 is the sensing space that has not been fully detected by the second communication apparatus. The second communication apparatus expects the first communication apparatus to feed back sensing data in the sensing space.

To enable the first communication apparatus to clearly learn whether to sense the sensing data in the sensing space or sense the sensing data outside the sensing space, the second communication apparatus may deliver fourth indication information to the first communication apparatus. The fourth indication information may include a type of the first sensing space, and the type of the first sensing space is sensing space that has been detected by the second communication apparatus or sensing space that has not been detected by the second communication apparatus. In this case, the first communication apparatus can learn, based on the fourth indication information, whether to sense the sensing data in the first sensing space or sense the sensing data outside the first sensing space. For example, the fourth indication information indicates that the first sensing space is the sensing space that has been detected by the second communication apparatus. In this case, after receiving the fourth indication information, the first communication apparatus may directly feed back the sensing data outside the first sensing space. This is merely an example for description in this application, and does not constitute any specific limitation.

Step 205: The first communication apparatus sends the feedback information to the second communication apparatus.

Correspondingly, the second communication apparatus receives the feedback information.

In this application, the structure information of the first sensing space is indicated by using the first tree structure, and sensing space in more shapes rather than only sensing space in a regular shape (for example, a cube/sphere/cone) can be described, so that sensing space is described more refinedly. In addition, the status information that is in or outside the first sensing space and that needs to be sensed by the first communication apparatus is indicated by using the first indication information, to avoid a case in which the first communication apparatus repeatedly feeds back the status information that has been obtained by the second communication apparatus. Such a manner can reduce feedback overheads of the device, and reduce power consumption of the device.

In this application, the first sensing space is indicated by using the first tree structure. Therefore, to enable the first communication apparatus to restore the first tree structure more quickly, the second communication apparatus may further indicate a traversal manner of the first tree structure, a coding mode of the first information, depth information of the first tree structure, a spatial region of the first sensing space, and other information. The following describes the following cases.

Case 1: The second communication apparatus sends fifth indication information to the first communication apparatus, where the fifth indication information may include one of the following: a traversal manner of the first tree structure and a coding mode of the first information. After receiving the fifth indication information, the first communication apparatus quickly decodes the first information based on the coding mode of the first information, and quickly restores the first tree structure based on the traversal manner of the first tree structure.

It should be noted that a traversal manner of a tree structure generally includes horizontal traversal and vertical traversal. Certainly, in actual application, another manner may be alternatively used for traversal, provided that the first communication apparatus and the second communication apparatus agree with each other on a traversal rule. A specific bit string (hexadecimal) obtained after the tree structure in (e) in FIG. 8 is horizontally traversed in a sequence from least significant bits to most significant bits is {0xFF, 0xFF, 0xFF, 0xFF, 0x55, 0xFF, 0xFF, 0xFF, 0x77, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0x55, 0x55, 0x55, 0x55, 0xF0, 0xF0, 0xF0, 0xF0, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF}. A specific bit string (hexadecimal) obtained after the tree structure in (e) in FIG. 8 is horizontally traversed in a sequence from most significant bits to least significant bits is {0xFF, 0x77, 0xFF, 0xFF, 0xFF, 0x55, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xF0, 0xF0, 0xF0, 0xF0, 0x55, 0x55, 0x55, 0x55, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF}. A specific bit string (hexadecimal) obtained after the tree structure in (e) in FIG. 8 is vertically traversed in a sequence from least significant bits to most significant bits is {0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0x55, 0x55, 0x55, 0x55, 0x55, 0xFF, 0xF0, 0xF0, 0xF0, 0xF0, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0x77, 0xFF, 0xFF, 0xFF, 0xFF, 0xFF, 0xFF}. The first communication apparatus can learn a quantity of levels of the first tree structure and a value of each node in the tree structure by determining the traversal manner of the first tree structure, so that a range of the first sensing space can be determined more quickly.

The foregoing information about the bit strings obtained through horizontal traversal and vertical traversal is the first information. In actual application, the second communication apparatus may directly send the first information to the first communication apparatus without coding the first information, or may code the first information and then send coded first information to the first communication apparatus. To further reduce indication overheads, entropy coding may be performed on the bit string. The entropy coding includes: arithmetic coding, coding by using a Lempel-Ziv-Markov chain algorithm (lempel-ziv-markov chain-algorithm, LZMA), Huffman coding, run-length coding, and the like.

The first communication apparatus and the second communication apparatus may define a traversal manner, a bit arrangement sequence (from least significant bits to most significant bits or from most significant bits to least significant bits), whether to use entropy coding and a corresponding coding method, and the like in a manner of agreement in advance or signaling interaction. For example, the second communication apparatus notifies, by using physical layer signaling or higher layer signaling (for example, RRC signaling), the first communication apparatus of the used traversal manner and bit arrangement sequence, and whether to use entropy coding and the corresponding coding method. Alternatively, when the first communication apparatus performs access or applies for initiating a service request, the first communication apparatus notifies the second communication apparatus of the used traversal manner and bit arrangement sequence, and whether to use entropy coding and the corresponding coding method.

The traversal manner of the first tree structure can be learned by using the fifth indication information, to learn how to arrange nodes of the tree structure. The coding mode of the first information can be further learned by using the fifth indication information, to accurately decode the first information. A reconstruction manner and coding efficiency of the first tree structure can be flexibly adjusted by using the fifth indication information.

Case 2: The second communication apparatus sends sixth indication information to the first communication apparatus, where the sixth indication information includes an indication manner of the first tree structure, and the indication manner is a complete indication or a partial indication. Correspondingly, the first communication apparatus receives the sixth indication information, and determines the indication manner of the first tree structure based on the sixth indication information.

It should be noted that a same counting rule may be used for values of all nodes in the first tree structure in the complete indication. It can be understood with reference to (e) in FIG. 8 that eight bits are used to indicate the values of the nodes in the first tree structure.

Nodes in the first tree structure in the partial indication may be classified into two types, and different indication manners are used for the two different types of nodes and subnodes, to reduce indication overheads.

Specifically, when the indication manner is the partial indication, it is assumed that the first tree structure includes α nodes, the α nodes include Y first nodes and Z second nodes, all subnodes of the first node need to be fed back (that is, all subspace parts corresponding to the first node need to be detected), and at least one of subnodes of the second node does not need to be fed back (that is, some subspace parts corresponding to the second node need to be detected, and some others do not need to be detected). α, Y, and Z are integers, and Y+Z is less than or equal to α (generally, a total quantity of the first node and the second node is less than a total quantity of nodes in the first tree structure; however, in actual application, the first tree structure may have no first node and only has a second node, and in this case, a value of Z is the same as that of α). The first information includes third information indicating the first node or the second node in the α nodes, a node value of the Z second nodes, and a node value of a subnode of the Z second nodes.

It should be noted that in actual application, the third information may indicate specific locations of the first node and the second node in the first tree structure, or an initial value of the first node and an initial value of the second node. The initial value of the first node and the initial value of the second node may be indicated by using specific values, for example, 0 and 1. Alternatively, indexes (index) may be directly used to indicate that the first node is first, fourth, and fifth nodes at a second level of the first tree structure, and the second node is second, third, sixth nodes, and the like at the second level of the first tree structure. Alternatively, the third information may perform indication in another manner. This is merely an example for description in this application, and does not constitute any specific limitation.

When specific values are used for indication, the initial value of the Y first nodes, the initial value of the Z second nodes, the node value of the Z second nodes, and the node value of the subnode of the Z second nodes may further need to be indicated. The initial value of the Y first nodes and the initial value of the Z second nodes may be indicated by using a first counting rule, and the node value of the Z second nodes and the node value of the subnode of the Z second nodes are indicated by using a second counting rule. A quantity of bits corresponding to the first counting rule is less than a quantity of bits corresponding to the second counting rule. For example, the first counting rule uses one bit for indication, and the second counting rule uses eight bits for indication. The initial value of the first node may be 1, and the initial value of the second node may be 0, both of which are indicated by using one bit. Alternatively, the initial value of the first node may be 0, and the initial value of the second node may be 0, both of which may be alternatively another value provided that the initial values can be indicated by using one bit. This is merely an example for description in this application, and does not constitute any specific limitation. As shown in (e) in FIG. 8, node values of the second nodes may be 0x55, 0xFF, 0x77, and the like shown at a second level, and node values of subnodes of the second nodes may be 0x55, 0x55, 0x55, 0x55, 0xF0, 0xF0, 0xF0, 0xF0, and the like shown at a third level. This is not specifically listed in this application.

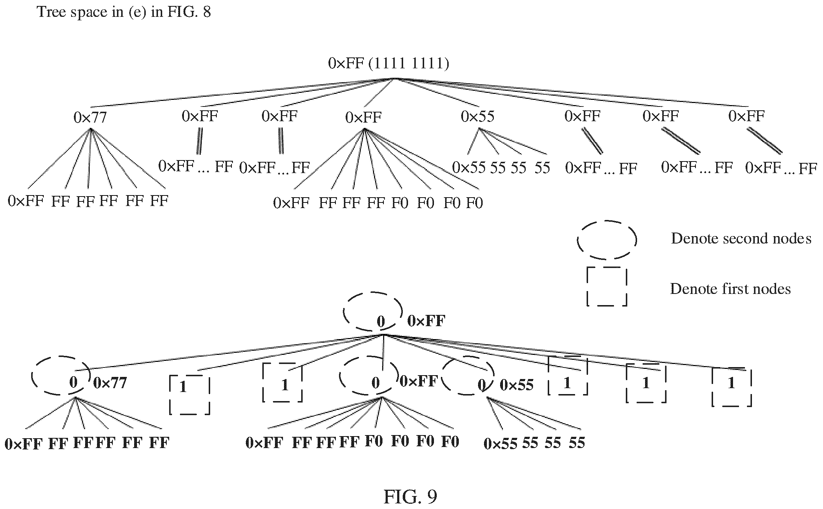

For example, for the tree structure in (e) in FIG. 8, a quantity of nodes in the tree structure is 67 (that is, a value of α). When the partial indication is used, refer to FIG. 9. In FIG. 9, second nodes are identified by using dashed oval boxes, and first nodes are identified by using dashed square boxes. All subnodes of a first node need to be fed back, that is, the first node is a node whose subnodes are all corresponding to values 0xFF. It can be learned from the condition that the first nodes are located at the second level of the tree structure, and a quantity of first nodes is 5 (that is, a value of Y). At least one of subnodes of a second node does not need to be fed back, that is, the second node is a node whose subnodes are not all corresponding to values 0xFF. Therefore, it can be learned that the second nodes are located at a first level and the second level of the tree structure, and a quantity of second nodes is 4 (that is, a value of Z) (5+4<67). In FIG. 9, the first nodes and the second nodes are indicated by using a counting rule whose quantity of bits is 1 corresponding to the counting rule (that is, the first counting rule). Initial values of the first nodes are 1, and initial values of the second nodes are 0. Certainly, in actual application, the values of the first nodes and the values of the second nodes may be alternatively exchanged, that is, the values of the first nodes are 0, and the values of the second nodes are 1, provided that the first communication apparatus and the second communication apparatus agree in advance. The four second nodes and subnodes of the four second nodes are indicated by using a counting rule whose quantity of bits is 8 corresponding to the counting rule (that is, the second counting rule). For example, it is specified that a value of the second node at the first level is 0xFF, values of the second nodes at the second level are 0x55, 0xFF, and 0x77, values of third-level subnodes of the second nodes are the same as the values of the nodes at the third level in the tree structure in FIG. 8 (e), which are not described one by one herein. It should also be noted that in this example, the second nodes at the second level are not considered as subnodes of the second node at the first level. Bit overheads occupied by using the first counting rule are nine bits, and bit overheads occupied by using the second counting rule are 176 bits, that is, (67-5*9)*8 bits. Because a first node includes eight subnodes (that is, space is divided into eight subspace parts each time), when the quantity of first nodes is 5, bits occupied by 5*9 nodes need to be subtracted. Compared with the tree structure in (e) in FIG. 8, that is, bits occupied by the complete indication to indicate the tree structure are 536 bits, that is, (67*8) bits, the partial indication occupies 185 bits, that is, (9+176) bits. Therefore, overheads are significantly reduced.

It should also be noted that during the partial indication, values of the subnodes of the first nodes are all 0xFF, and therefore do not need to be separately indicated, provided that the first communication apparatus and the second communication apparatus agree on the values of the subnodes of the first nodes. In this case, when receiving the sixth indication information and determining that the first tree structure uses the partial indication (as indicated in the tree structure in FIG. 9), the first communication apparatus can restore the first tree structure (that is, the tree structure in (e) in FIG. 8) based on the initial values of the first nodes, the initial values of the second nodes, the node values of the second nodes, and the node values of the subnodes of the second nodes in the indication information.

Certainly, in actual application, when the partial indication is used, whether the first tree structure is specifically an equally divided X-tree or an unequally divided X-tree may be further determined. Then, the first communication apparatus can learn how many nodes are included in the first node. If the first tree structure is an equally divided 16-tree, the first node includes 16 subnodes. If the first tree structure is an unequally divided quadtree, the first node includes four subnodes.

In addition, in this application, it may be defined as follows: A tree structure constructed by the first nodes and the second nodes is a binary space tree (in the binary space tree, the initial values of the first nodes are 1, and the initial values of the second nodes are 0, as shown in FIG. 9), and a tree structure constructed by nodes that are in the α nodes and that are other than the first nodes and the subnodes of the first nodes is a residual space tree (in the residual space tree, the node values of the second nodes are 0xFF, 0x55, 0xFF, and 0x77, and the node values of the subnodes of the second nodes are 0x55, 0x55, 0x55, 0x55, 0xF0, 0xF0, 0xF0, 0xF0, and the like, as shown in FIG. 9). The binary space tree constructed in FIG. 9 may be horizontally traversed or vertically traversed. This is not specifically limited in this application. A bit string (binary) obtained after the binary space tree is horizontally traversed in a sequence from least significant bits to most significant bits is {0, 1, 1, 1, 0, 0, 1, 1, 0}. A bit string (hexadecimal) obtained after the nodes of the residual space tree are horizontally traversed in a sequence from least significant bits to most significant bits is {0xFF, 0x55, 0xFF, 0x77, 0x55, 0x55, 0x55, 0x55, 0xF0, 0xF0, 0xF0, 0xF0, 0xFF, 0xFF, 0xFF, 0xFF, 0xFF, 0xFF, 0xFF, 0xFF, 0xFF, 0xFF}. To further reduce indication overheads, entropy coding, for example, arithmetic coding, coding by using LZMA, Huffman coding, or run-length coding, may be applied to the bit strings obtained by traversing the binary space tree and the residual space tree.

Case 3: The second communication apparatus sends seventh indication information to the first communication apparatus, where the seventh indication information includes depth information of the first tree structure. After receiving the seventh indication information, the first communication apparatus quickly restores the first tree structure based on the depth information of the first tree structure.

To obtain a more accurate space description, sensing space may be continuously divided, and a large quantity of division times indicates more branches of the first tree structure and a deeper depth of the first tree structure. Different first communication apparatuses have different data processing capabilities. A depth of the first tree structure is indicated by using the seventh indication information, so that accuracy of the space description can be flexibly adjusted, efficiency of restoring the structure information of the first tree structure by the first communication apparatus can be improved, and a data processing capability can be improved.

For example, a depth of the tree structure in (e) in FIG. 8 is 2. After the second communication apparatus indicates the depth information of the first tree structure, the first communication apparatus may reconstruct the first tree structure based on the depth information of the first tree structure and the first information. For another example, in the tree structure in the partial indication manner in FIG. 9, a depth of the residual space tree is 2 (that is, the depth of the first tree structure is 2). After the second communication apparatus indicates the depth information of the first tree structure, the first communication apparatus may reconstruct the first tree structure based on the depth information of the first tree structure and the first information.

Case 4: The second communication apparatus sends eighth indication information to the first communication apparatus, where the eighth indication information includes a spatial region of the first sensing space, and the spatial region of the first sensing space includes contour information of the tree structure of the first sensing space. After receiving the eighth indication information, the first communication apparatus determines the spatial region of the first sensing space based on the eighth indication information.

It should be noted that the contour information of the first tree structure can be understood as an enclosing box or a bounding box (bounding box) of an octree, that is, a large cube in FIG. 7 or FIG. 8. The contour information of the first tree structure may be determined based on local coordinates relative to the first communication apparatus or global coordinates. Specifically, the contour information of the first tree structure may be indicated in a manner of origin+[length, width, height], may be indicated by using three vectors representing an X-axis, a Y-axis, and a Z-axis, or may be indicated in another manner.

A specific location and a spatial region, in physical space, of the tree structure of the first sensing space can be learned by using the spatial region of the first sensing space, to restore the first tree structure more accurately.

Case 5: The second communication apparatus sends third indication information to the first communication apparatus. Correspondingly, the first communication apparatus receives the third indication information, where the third indication information includes adjustment information, and the adjustment information indicates structure information of second sensing space. The adjustment information includes at least one of the following: structure information of the second sensing space added relative to that of the first sensing space, and structure information of the second sensing space deleted relative to that of the first sensing space.

It should be noted that sensing space may be indicated in an incremental manner. To be specific, the second communication apparatus may gradually increase a depth of a space tree based on a requirement of a sensing task, a sensing result fed back by the first communication apparatus, and the like. The second communication apparatus may gradually increase the depth of the space tree based on the received sensing result and a subsequent sensing requirement, to implement adaptation between sensing performance, compression efficiency, and transmission overheads.

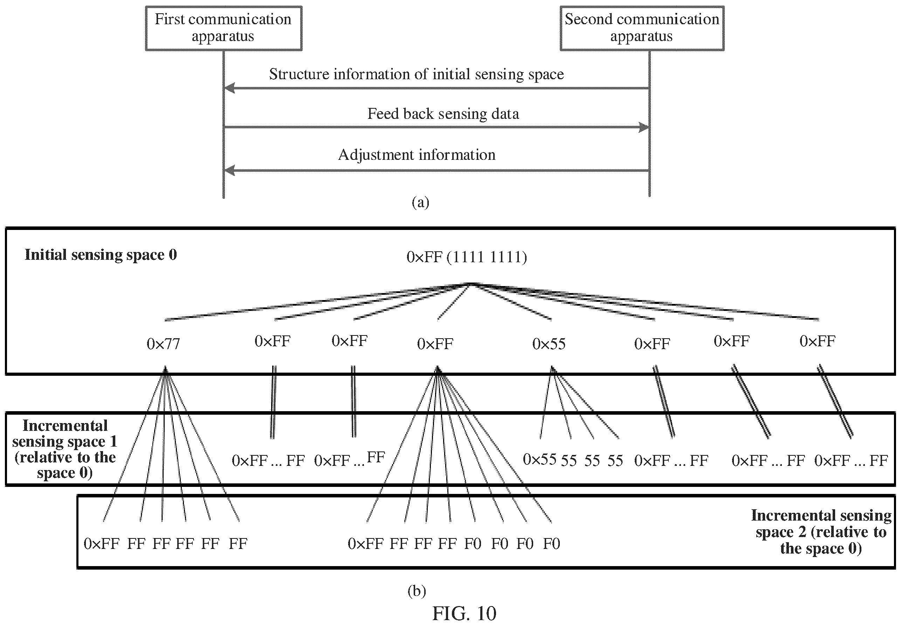

FIG. 10 shows an example of a hierarchical/progressive indication of sensing space. In such a manner, (a) in FIG. 10 illustrates that the second communication apparatus first indicates structure information of initial sensing space (the structure information of the first sensing space), and then further indicates structure information of incremental sensing space (the structure information of the second sensing space) by using the adjustment information and based on sensing data fed back by the first communication apparatus. The adjustment information may perform indication in an incremental manner, that is, sensing space indicated once before may be referenced, to reduce indication overheads. For example, in (b) in FIG. 10, if sensing space 1 includes sensing space 0 and incremental sensing space 1, the sensing space 1 may be indicated with reference to the sensing space 0. In this case, only incremental node values (0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0x55, 0x55, 0x55, 0x55, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF, 0xFF) need to be sent in the adjustment information. If sensing space 2 includes the sensing space 0 and the incremental sensing space 1, the sensing space 2 may be indicated with reference to the sensing space 0. In this case, only incremental node values (0xF0, 0xF0, 0xF0, 0xF0, 0xFF, 0xFF, 0xFF, 0xFF, 0xFF, 0xFF, 0xFF, 0xFF, 0xFF, 0xFF) need to be sent in the adjustment information. The sensing space 0 may be indicated with reference to the sensing space 2. In this case, only node values (0xF0, 0xF0, 0xF0, 0xF0, 0xFF, 0xFF, 0xFF, 0xFF, 0xFF, 0xFF, 0xFF, 0xFF, 0xFF, 0xFF) need to be reduced in the adjustment information.

In this application, the structure information of the second sensing space may be indicated based on the third indication information, and the third indication information indicates the structure information of the second sensing space adjusted relative to that of the first sensing space, instead of directly indicating the structure information of the second sensing space. In such a manner, the structure information of the first sensing space can be reused, and indication overheads of the second sensing space can be reduced.

It should be noted that the adjustment information may include an index relative to specific sensing space. For example, the sensing space 2 is indicated relative to the sensing space 1. In this case, when the sensing space 2 is indicated, the index of the sensing space in the adjustment information may be the sensing space 1. Certainly, in actual application, information about the index may alternatively not be indicated, provided that the first communication apparatus and the second communication apparatus agree that the adjustment information performs indication relative to sensing space indicated last time or last two times.

The adjustment information may include an index of a tree corresponding to the adjusted structure information. For example, in the case 2, the values of the nodes in the tree structure vary according to the complete indication and the partial indication that are used for indication. Determining the index of the tree corresponding to the adjusted structure information can ensure that the first communication apparatus accurately determines the sensing space.

The adjustment information may include first information corresponding to the adjusted structure information, whether to perform coding, for example, arithmetic coding, coding by using LZMA, Huffman coding, or run-length coding, on the first information corresponding to the adjusted structure. Such a manner can ensure that the first communication apparatus accurately determines the tree structure and quickly restores the sensing space.

The second communication apparatus can clearly indicate the first tree structure based on the first indication information, and the third indication information to the eighth indication information, and the first communication apparatus can quickly restore the first tree structure based on the foregoing indication information. However, after the first communication apparatus restores the first tree structure and determines the first sensing space, how to specifically feed back the feedback information is not described above. To adapt to device capabilities of various first communication apparatuses and a service requirement of the second communication apparatus, the following describes a specific rule used to feed back the feedback information.

In actual application, the second communication apparatus may further indicate, by using feedback configuration information, the first communication apparatus to use a specific granularity for feeding back the feedback information. By the feedback of the feedback information based on the feedback configuration information, a device capability or a channel status of the first communication apparatus, and a data volume and data accuracy of the feedback information of the first sensing space that is currently learned by the second communication apparatus are fully considered, so that a data processing amount of the first communication apparatus can be reduced, and accuracy of the feedback information of the first sensing space can be ensured.

Specifically, the second communication apparatus may indicate a different compression level for each first communication apparatus. This mainly depends on a view direction, a capability, power consumption, a channel condition, and the like of the first communication apparatus and a requirement of the second communication apparatus (for example, a base station). For example, sensing space of a device A and a device B overlaps, and the device A has transmitted a sensing result of the device A to the base station. In this case, the device B needs to transmit only a sensing result of a non-overlapping region between the device B and the device A, to reduce transmission overheads.

In addition, different sensing levels, compression levels, and even transmission protection levels may be applied to data for a non-overlapping region and an overlapping region. For example, the device B may apply a higher compression ratio to a sensing result of an overlapping region between the device B and the device A, and apply a lower compression ratio to the sensing result of the non-overlapping region. Because the base station has obtained the sensing result of the overlapping region, the device B can reduce an amount of feedback data.

Specifically, the second communication apparatus sends second indication information to the first communication apparatus, where the second indication information includes the feedback configuration information of the first sensing space, and the feedback configuration information includes at least one of the following: a sensing level of the feedback information, a compression level of the feedback information, and a transmission protection level of the feedback information. Correspondingly, the first communication apparatus receives the second indication information, and feeds back the feedback information based on the second indication information.

The sensing level (sensing level, SL) can be understood as specific precision and granularity used to sense an ambient environment. For example, the first communication apparatus has sampling rates of 8 kHz and 12 kHz. To determine more detailed status information of the ambient environment, the sampling rate of 12 kHz is used to sense the ambient environment. It can be understood that the sensing level is higher in such a manner. This is merely an example for description herein, and does not constitute any specific limitation.

The compression level (compression level, CL) can be understood as an information compression degree during transmission of feedback information. For example, a higher compression level indicates that a higher compression ratio is used for the feedback information, to reduce bit overheads. However, a higher compression ratio generally causes higher data distortion. This is merely an example for description herein, and does not constitute any specific limitation.

The transmission protection level (protection level, PL) can be understood as a channel protection level for transmission of feedback information. For example, a 1/2 channel coding rate and binary phase shift keying (binary phase shift keying, BPSK) modulation can provide a higher channel protection level, and a 3/4 channel coding rate and quadrature phase shift keying (quadrature phase shift keying, QPSK) modulation can provide a slightly poorer channel protection capability than that of the former. This is merely an example for description herein, and does not constitute any specific limitation.

Certainly, in actual application, a same SL/CL/PL may be used for space that has not been detected by the second communication apparatus, and different SLs/CLs/PLs are separately used for subspace that has not been observed and subspace that has been partially observed (for example, space that overlaps space of another device). Alternatively, the first communication apparatus and the second communication apparatus may use specific feedback configuration information by default. In this case, when the second communication apparatus does not indicate the second indication information, the feedback information may be fed back by using the default feedback configuration information.

It should be noted that when indicating the feedback configuration information by using the second indication information, the second communication apparatus may directly indicate a specific value of the feedback configuration information, or may directly indicate an index of the feedback configuration information by using the second indication information after the first communication apparatus and the second communication apparatus preset the feedback configuration information. This is not specifically limited in this application. For example, Table 1 indicates CLs and Table 2 indicates SLs. In Table 1, in terms of CL=1 (equivalent to an index 1 of the CL), a corresponding quantization level is a, and a prediction threshold is b. In Table 2, in terms of SL=1 (equivalent to an index 2 of the SL), a corresponding sensing level is m, and a threshold is n. In actual application, only one or more rows may be applied. This is not specifically limited in this application. The feedback configuration information indicated in the tables may be prestored in the first communication apparatus and the second communication apparatus, or may be indicated by the second communication apparatus to the first communication apparatus in a unicast, multicast, or broadcast manner by using related signaling.

**Table 1**

| | |
|---|---|
| CL=1 | Quantization level=a, prediction threshold=b, ... |
| CL=2 | Quantization level=c, prediction threshold=d, ... |
| ... | ... |
| CL=N | Quantization level=x, prediction threshold=y, ... |

**Table 2**

| | |
|---|---|
| SL=1 | Sensing level=m, threshold=n, ... |
| ... | ... |
| SL=N | Sensing level=p, threshold=q, ... |

Certainly, the feedback configuration information may be alternatively indicated by using a specific value, for example, a value of a sensing level is directly indicated; or may be indicated by using a tree structure. This is not specifically limited in this application.

When the feedback configuration information is indicated by using a tree structure, the second communication apparatus may reconstruct a tree structure to indicate the feedback configuration information. However, such a manner has a high requirement on a data processing capability of the second communication apparatus. In addition, after the second communication apparatus has constructed the first tree structure, constructing another tree structure obviously consumes a large quantity of data processing resources, and may further occupy a large quantity of storage space. In view of this, the feedback configuration information in this application may be indicated by using a second tree structure. The second tree structure is a sub-structure of the first tree structure. In other words, the second tree structure reuses the first tree structure to indicate the feedback configuration information. Such a manner can reduce a data processing amount of the second communication apparatus, and improve data processing efficiency of the second communication apparatus.

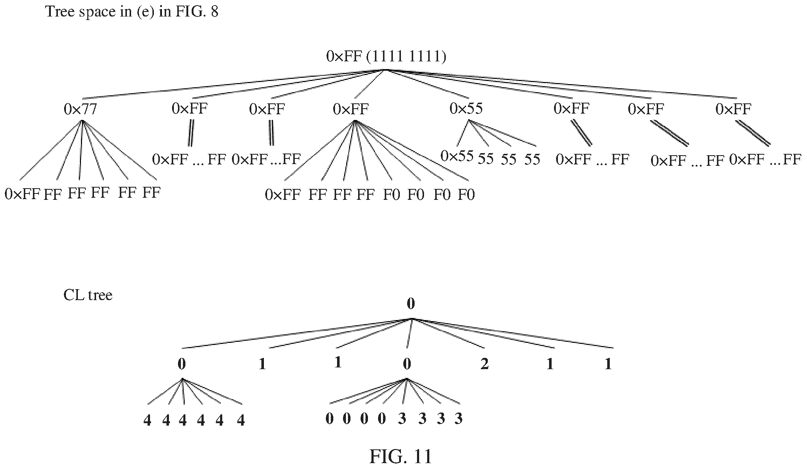

It is assumed that sensing space is the sensing space shown in FIG. 8. When the second communication apparatus indicates the feedback configuration information, for example, a CL, the tree structure in (e) in FIG. 8 may be reused. In this case, the second tree structure may be shown in FIG. 11. In FIG. 11, non-zero values indicate that all recursive subtrees use CL values specified on nodes; and 0 indicates that recursion of nodes does not end, or nodes use default CL values. In such a manner, extra overheads caused by a CL tree are quite small. Herein, horizontal traversal may be preferably performed. The CL tree in FIG. 11 is used as an example. A structure information bit string obtained after the CL tree is horizontally traversed in a sequence from least significant bits to most significant bits is {0, 1, 1, 2, 0, 1, 1, 0, 3, 3, 3, 3, 0, 0, 0, 0, 4, 4, 4, 4, 4, 4}. In addition, entropy coding may be further performed on the bit string of the CL tree to further reduce overheads. The second indication information may carry depth information of the CL tree, structure information indicating the CL tree, and coding information of the structure information.

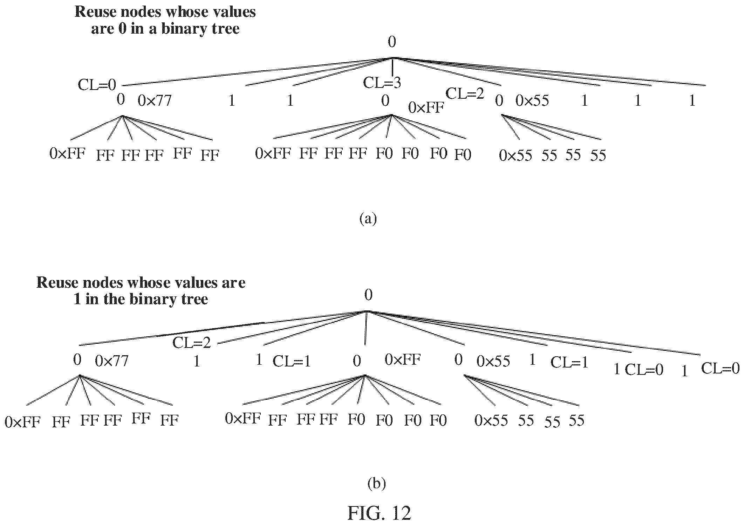

Alternatively, the second tree structure may be indicated by reusing the tree structure in FIG. 9. (a) in FIG. 12 shows an example in which the CL tree reuses nodes whose values are 0 in the binary space tree in the example in FIG. 11. In the binary tree, nodes whose values are 1 may use default CL values or given CL values, and nodes whose values are 0 use CL values configured in the CL tree. In this way, the CL tree needs only low indication overheads (3 bytes in this example, that is, CL=2, 3, 0). Similarly, (b) in FIG. 12 shows an example in which the CL tree reuses nodes whose values are 1 in the binary space tree. Likewise, a CLJPL/SL tree and the like may also be indicated by increasing a depth of the tree level by layer, and an incremental depth may be the same as that of the first tree structure or may incrementally increase independently.

It should be noted that during implementation of the solutions of this application, a tree structure of sensing space is indicated (by using a complete indication or a partial indication), and a CL tree, an SL tree, and a PL tree may be further included. Therefore, in actual application, a specific tree structure further needs to be determined, to better determine feedback information of the sensing space.

The foregoing adjustment information may further include whether the tree corresponding to the adjusted structure information reuses a tree structure corresponding to other sensing space (which may be a CL tree, or may be another tree structure or the like). If the tree structure corresponding to the other sensing space needs to be reused, reused reference information, depth information of the reused tree structure, and the like need to be further indicated. For example, the adjustment information is indicated by indicating an incremental tree, and the reused reference information may be indicated by using the following information:
An index of relative sensing space indicates specific sensing space to be referenced (that is, an incremental indication is performed relative to specific sensing space).

An index of an incremental tree is an index of a tree in relative sensing space (because there may be a plurality of types of trees, which tree is to be referenced for an incremental indication needs to be indicated, an index of the tree may be indicated, and whether the referenced tree is a CL tree or an SL tree is learned by using the index).

Whether an incremental tree reuses other trees: for example, whether an incremental CL tree reuses a binary space tree. If the incremental CL tree does not reuse other trees, depth information of the tree may be selectively indicated.

Coding type of an incremental tree: For example, entropy coding is not used, and arithmetic coding, coding by using LZMA, Huffman coding, run-length coding, or the like is used.

Structure information of an incremental tree: If entropy coding is not used, the structure information is node values of the tree. If entropy coding is used, the structure information is node values obtained through entropy coding.

The first indication information to the eighth indication information may be carried in same signaling. For example, the structure information of the first sensing space, the feedback configuration information of the first sensing space, the type of the first sensing space, the traversal manner of the first tree structure of the first sensing space, the coding mode of the first information indicating the first tree structure of the first sensing space, the indication manner of the first tree structure, the depth information of the first tree structure, and the spatial region of the first sensing space are indicated in a piece of signaling. After receiving the foregoing information, the first communication apparatus may parse the information, reconstruct the first tree structure based on the parsed information, and feed back the feedback information based on the information. Alternatively, the first indication information to the eighth indication information may be carried in different signaling. After receiving the signaling, the first communication apparatus parses the signaling one by one. This is not specifically limited in this application.

The foregoing mainly describes, from a perspective of device interaction, the solutions provided in embodiments of this application. It can be understood that, to implement the foregoing functions, each device may include a corresponding hardware structure and/or software module for performing each function. A person skill in the art should be easily aware that, in embodiments of this application, the units and algorithm steps in the examples described with reference to embodiments disclosed in this specification can be implemented by using hardware or a combination of hardware and computer software. Whether a function is performed by using hardware or by computer software driving hardware depends on particular applications and design constraints of the technical solutions. A person skilled in the art may use a different method to implement the described functions for each particular application, but it should not be considered that the implementation goes beyond the scope of this application.

In embodiments of this application, the device may be divided into functional units based on the foregoing method examples. For example, each functional unit may be obtained through division in correspondence to each function, or two or more functions may be integrated into one unit. The integrated unit may be implemented in a form of hardware, or may be implemented in a form of a software functional unit.

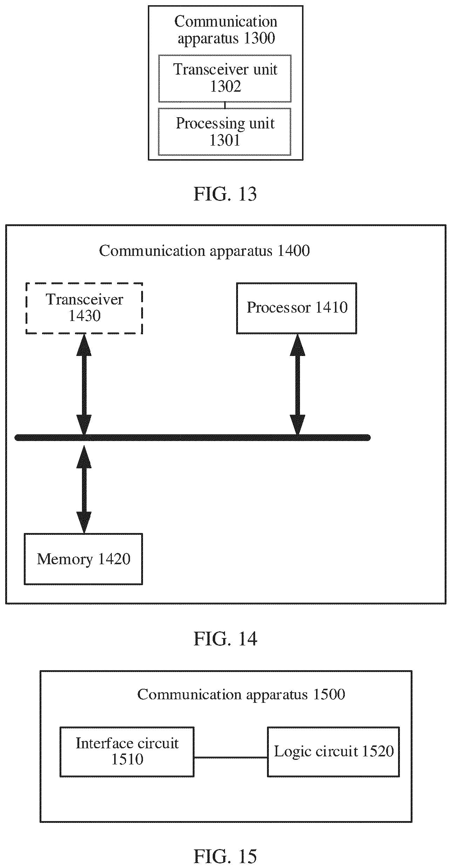

When an integrated unit is used, FIG. 13 is a possible example block diagram of a communication apparatus according to an embodiment of this application. As shown in FIG. 13, the communication apparatus 1300 may include a processing unit 1301 and a transceiver unit 1302. The processing unit 1301 is configured to control and manage actions of the communication apparatus 1300, and the transceiver unit 1302 is configured to support communication between the communication apparatus 1300 and another device. Optionally, the transceiver unit 1302 may include a receiving unit and/or a sending unit, configured to perform a receiving operation and a sending operation, respectively. Optionally, the communication apparatus 1300 may further include a storage module, configured to store program code and/or data of the communication apparatus 1300. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the foregoing first communication apparatus, second communication apparatus, or the like.

In an embodiment, when the communication apparatus 1300 is used as the first communication apparatus, the transceiver unit 1302 is configured to receive first indication information from a second communication apparatus, where the first indication information includes structure information of first sensing space, and the structure information of the first sensing space includes first information indicating a first tree structure of the first sensing space. The processing unit 1301 is configured to: determine the tree structure of the first sensing space based on the first indication information, and determine feedback information based on the tree structure of the first sensing space, where the feedback information indicates status information sensed by the first communication apparatus in the first sensing space or status information sensed by the first communication apparatus outside the first sensing space. The transceiver unit 1302 is further configured to send the feedback information to the second communication apparatus.

Optionally, the transceiver unit 1302 is further configured to receive second indication information from the second communication apparatus, where the second indication information includes feedback configuration information of the first sensing space, and the feedback configuration information includes at least one of the following: a sensing level of the feedback information, a compression level of the feedback information, and a transmission protection level of the feedback information. The processing unit 1301 is configured to feed back the feedback information based on the second indication information.

Optionally, the feedback configuration information is indicated by using a second tree structure, and the second tree structure is a sub-structure of the first tree structure.

Optionally, the transceiver unit 1302 is further configured to receive third indication information from the second communication apparatus, where the third indication information includes adjustment information, and the adjustment information indicates structure information of second sensing space; and the adjustment information includes at least one of the following:
structure information of the second sensing space added relative to that of the first sensing space, and structure information of the second sensing space deleted relative to that of the first sensing space.

Optionally, the first tree structure includes one of the following:
an equally divided X-tree or an unequally divided X-tree, where X is a positive integer greater than or equal to 2; and
the unequally divided X-tree incompletely equally divides space into X regions, and the equally divided X-tree equally divides space into X regions.

Optionally, the first tree structure is the unequally divided X-tree, and the first indication information further includes second information indicating a division point of the unequally divided X-tree.

Optionally, X is 2, 4, 8, or 16.

Optionally, the transceiver unit 1302 is further configured to receive fourth indication information from the second communication apparatus, where the fourth indication information includes a type of the first sensing space, and the type of the first sensing space is sensing space that has been detected by the second communication apparatus or sensing space that has not been detected by the second communication apparatus. The processing unit 1301 is configured to determine the type of the first sensing space based on the fourth indication information.

Optionally, the transceiver unit 1302 is further configured to receive fifth indication information from the second communication apparatus, where the fifth indication information includes one of the following: a traversal manner of the tree structure of the first sensing space and a coding mode of the first information.

Optionally, the transceiver unit 1302 is further configured to receive sixth indication information from the second communication apparatus, where the sixth indication information includes an indication manner of the first tree structure, and the indication manner is a complete indication or a partial indication. The processing unit 1301 is configured to determine the indication manner of the first tree structure based on the sixth indication information.

Optionally, when the indication manner is the partial indication, the first tree structure includes α nodes, the α nodes include Y first nodes and Z second nodes, all subnodes of the first node need to be fed back, and at least one of subnodes of the second node does not need to be fed back, where α, Y, and Z are integers, and Y+Z is less than or equal to α; and
the first information includes third information indicating the first node or the second node in the α nodes, a node value of the Z second nodes, and a node value of a subnode of the Z second nodes.

Optionally, the transceiver unit 1302 is further configured to receive seventh indication information from the second communication apparatus, where the seventh indication information includes depth information of the first tree structure. The processing unit 1301 is further configured to determine the depth information of the first tree structure based on the seventh indication information.

Optionally, the transceiver unit 1302 is further configured to receive eighth indication information from the second communication apparatus, where the eighth indication information includes a spatial region of the first sensing space, and the spatial region of the first sensing space includes contour information of the tree structure of the first sensing space. The processing unit 1301 is configured to determine the spatial region of the first sensing space based on the eighth indication information.

Optionally, before receiving the first indication information from the second communication apparatus, the transceiver unit 1302 further feeds back contour information of an observation region to the second communication apparatus.

In another embodiment, when the communication apparatus 1300 is used as the second communication apparatus, the processing unit 1301 is configured to determine first sensing space. The transceiver unit 1302 is configured to: send first indication information to a first communication apparatus, where the first indication information includes structure information of the first sensing space, and the structure information of the first sensing space includes first information indicating a first tree structure of the first sensing space; and receive feedback information from the first communication apparatus, where the feedback information indicates status information sensed by the first communication apparatus in the first sensing space or status information sensed by the first communication apparatus outside the first sensing space.

Optionally, the transceiver unit 1302 is further configured to send second indication information to the first communication apparatus, where the second indication information includes feedback configuration information of the first sensing space, and the feedback configuration information includes at least one of the following: a sensing level of the feedback information, a compression level of the feedback information, and a transmission protection level of the feedback information.

Optionally, the feedback configuration information is indicated by using a second tree structure, and the second tree structure is a sub-structure of the first tree structure.

Optionally, the transceiver unit 1302 is further configured to send third indication information to the first communication apparatus, where the third indication information includes adjustment information, and the adjustment information indicates structure information of second sensing space; and the adjustment information includes at least one of the following:
structure information of the second sensing space added relative to that of the first sensing space, and structure information of the second sensing space deleted relative to that of the first sensing space.

Optionally, the first tree structure includes one of the following:
an equally divided X-tree or an unequally divided X-tree, where X is a positive integer greater than or equal to 2; and
the unequally divided X-tree incompletely equally divides space into X regions, and the equally divided X-tree equally divides space into X regions.

Optionally, the first tree structure is the unequally divided X-tree, and the first indication information further includes second information indicating a division point of the unequally divided X-tree.

Optionally, X is 2, 4, 8, or 16.

Optionally, the transceiver unit 1302 is further configured to send fourth indication information to the first communication apparatus, where the fourth indication information includes a type of the first sensing space, and the type of the first sensing space is sensing space that has been detected by the second communication apparatus or sensing space that has not been detected by the second communication apparatus.

Optionally, the transceiver unit 1302 is further configured to send fifth indication information to the first communication apparatus, where the fifth indication information includes one of the following: a traversal manner of the tree structure of the first sensing space and a coding mode of the first information.

Optionally, the transceiver unit 1302 is further configured to send sixth indication information to the first communication apparatus, where the sixth indication information includes an indication manner of the first tree structure, and the indication manner is a first manner or a second manner. Values of nodes in the first tree structure in the first manner are all indicated by using a same counting rule, and values of nodes in the first tree structure in the second manner are indicated by using different counting rules.

Optionally, when the indication manner is the partial indication, the first tree structure includes α nodes, the α nodes include Y first nodes and Z second nodes, all subnodes of the first node need to be fed back, and at least one of subnodes of the second node does not need to be fed back, where α, Y, and Z are integers, and Y+Z is less than or equal to α; and
the first information includes third information indicating the first node or the second node in the α nodes, a node value of the Z second nodes, and a node value of a subnode of the Z second nodes.

Optionally, the transceiver unit 1302 is further configured to send seventh indication information to the first communication apparatus, where the seventh indication information includes depth information of the first tree structure.

Optionally, the transceiver unit 1302 is further configured to send eighth indication information to the first communication apparatus, where the eighth indication information includes a spatial region of the first sensing space, and the spatial region of the first sensing space includes contour information of the tree structure of the first sensing space.

Optionally, before the processing unit 1301 determines the first sensing space, the transceiver unit 1302 is further configured to receive contour information that is of an observation region and that is fed back by the first communication apparatus. The processing unit 1301 determines the first sensing space of the first communication apparatus based on the contour information that is of the observation region and that is fed back by the first communication apparatus.

FIG. 14 shows a communication apparatus 1400 further provided in this application. The communication apparatus 1400 may be a chip or a chip system. The communication apparatus may be located in the device in any foregoing method embodiment. For example, the communication apparatus is located in the mobile phone, the printer, the vehicle, the network device, or the like in FIG. 1. Certainly, in actual application, the communication apparatus may be alternatively located in another device. This is not specifically limited in this application.

Optionally, the chip system may include a chip, or may include a chip and another discrete device.

The communication apparatus 1400 includes a processor 1410.

The processor 1410 is configured to execute a computer program stored in a memory 1420, to implement actions of each device in any foregoing method embodiment.

The communication apparatus 1400 may further include the memory 1420, configured to store the computer program.

Optionally, the memory 1420 is coupled to the processor 1410. The coupling is an indirect coupling or a communication connection between apparatuses, units, or modules, may be in an electrical form, a mechanical from, or another form, and is used for information exchange between the apparatuses, the units, or the modules. Optionally, the memory 1420 and the processor 1410 and are integrated together.

There may be one or more processors 1410 and one or more memories 1420. This is not limited.

Optionally, in actual application, the communication apparatus 1400 may include or may not include a transceiver 1430. A dashed-line box is used for illustration in the figure. The communication apparatus 1400 may exchange information with another device through the transceiver 1430. The transceiver 1430 may be a circuit, a bus, a transceiver, or any other apparatus that may be configured to exchange information.

In a possible implementation, the communication apparatus 1400 may be the mobile phone, the printer, the vehicle, the network device, or the like in the foregoing method implementations. This is not specifically limited in this application.

A specific connection medium between the transceiver 1430, the processor 1410, and the memory 1420 is not limited in this embodiment of this application. In this embodiment of this application, the memory 1420, the processor 1410, and the transceiver 1430 are connected through a bus in FIG. 14. The bus is represented by using a bold line in FIG. 14. This is merely an example for description, and does not constitute any limitation. There may be other connection manners between the components. The bus may be classified into an address bus, a data bus, a control bus, and the like. For ease of representation, the bus is represented by using only one bold line in FIG. 14, but this does not mean that there is only one bus or one type of bus. In this embodiment of this application, the processor may be a general-purpose processor, a digital signal processor, an application-specific integrated circuit, a field programmable gate array, or another programmable logic device, a discrete gate, a transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly implemented by a hardware processor, or may be implemented by a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random-access memory, RAM). Alternatively, the memory may be any other medium that can be used to carry or store expected program code in a form of instructions or a data structure and that can be accessed by a computer, but is not limited thereto. Alternatively, the memory in this embodiment of this application may be a circuit or any other apparatus that can implement a storage function, and is configured to store a computer program, program instructions, and/or data.

Based on the foregoing embodiments, as shown in FIG. 15, an embodiment of this application further provides another communication apparatus 1500, including an interface circuit 1510 and a logic circuit 1520. The interface circuit 1510 can be understood as an input/output interface, and may be configured to perform sending and receiving steps performed by each device in any foregoing method embodiment, for example, the foregoing step 202 being a sending step of sending the first indication information by the second communication apparatus to the first communication apparatus, or the foregoing step 205 being a sending step of sending the feedback information by the first communication apparatus to the second communication apparatus. The logic circuit 1520 may be configured to run code or instructions to perform the method performed by each device in any foregoing embodiment. Details are not described again.

Based on the foregoing embodiments, an embodiment of this application further provides a computer-readable storage medium. The computer-readable storage medium stores instructions. When the instructions are executed, the method performed by each device in any foregoing method embodiment is implemented. For example, the method performed by the first communication apparatus or the second communication apparatus in the embodiment shown in FIG. 2 is implemented. The computer-readable storage medium may include: any medium that can store program code, like a USB flash drive, a removable hard disk, a read-only memory, a random access memory, a magnetic disk, or an optical disc.

Based on the foregoing embodiments, an embodiment of this application provides a communication system. The communication system includes the first communication apparatus and the second communication apparatus that are mentioned in any foregoing method embodiment, and may be configured to perform the method performed by each device in any foregoing method embodiment.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, and an optical memory) that include computer usable program code.

This application is described with reference to the flowcharts and/or block diagrams of the method, the apparatuses (systems), and the computer program product according to this application. It should be understood that computer program instructions may be used to implement each process in the flowcharts and/or each block in the block diagrams and a combination of a process in the flowcharts and/or a block in the block diagrams. These computer program instructions may be provided for a general-purpose computer, a special-purpose computer, an embedded processor, or a processor of another programmable data processing apparatus to generate a machine, so that the instructions executed by the computer or the processor of the another programmable data processing apparatus generate an apparatus for implementing a specified function in one or more processes in the flowcharts and/or in one or more blocks in the block diagrams.

Alternatively, these computer program instructions may be stored in a computer-readable memory that can instruct the computer or the another programmable data processing apparatus to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

Alternatively, these computer program instructions may be loaded onto the computer or the another programmable data processing apparatus, so that a series of operation steps are performed on the computer or the another programmable apparatus to generate computer-implemented processing. Therefore, the instructions executed on the computer or the another programmable apparatus provide steps for implementing a specified function in one or more processes in the flowcharts and/or in one or more blocks in the block diagrams.

## Claims

1. A space indication method, applied to a first communication apparatus, comprising:
receiving first indication information from a second communication apparatus, wherein the first indication information comprises structure information of first sensing space, and the structure information of the first sensing space comprises first information indicating a first tree structure of the first sensing space;
determining feedback information based on the tree structure of the first sensing space, wherein the tree structure of the first sensing space is determined based on the first indication information, and the feedback information indicates status information sensed by the first communication apparatus in the first sensing space or status information sensed by the first communication apparatus outside the first sensing space; and
sending the feedback information to the second communication apparatus.

2. The method according to claim 1, wherein the method further comprises:
receiving second indication information from the second communication apparatus, wherein the second indication information comprises feedback configuration information of the first sensing space, and the feedback configuration information comprises at least one of the following: a sensing level of the feedback information, a compression level of the feedback information, and a transmission protection level of the feedback information; and
feeding back the feedback information based on the second indication information.

3. The method according to claim 2, wherein the feedback configuration information is indicated by using a second tree structure, and the second tree structure is a sub-structure of the first tree structure.

4. The method according to any one of claims 1 to 3, wherein the method further comprises:
receiving third indication information from the second communication apparatus, wherein the third indication information comprises adjustment information, and the adjustment information indicates structure information of second sensing space; and
the adjustment information comprises at least one of the following:
structure information of the second sensing space added relative to that of the first sensing space, and structure information of the second sensing space deleted relative to that of the first sensing space.

5. The method according to any one of claims 1 to 4, wherein the first tree structure comprises one of the following:
an equally divided X-tree or an unequally divided X-tree, wherein X is a positive integer greater than or equal to 2; and
the unequally divided X-tree incompletely equally divides space into X regions, and the equally divided X-tree equally divides space into X regions.

6. The method according to claim 5, wherein the first tree structure is the unequally divided X-tree, and the first indication information further comprises second information indicating a division point of the unequally divided X-tree.

7. The method according to claim 5 or 6, wherein X is 2, 4, 8, or 16.

8. The method according to any one of claims 1 to 7, wherein the method further comprises:
receiving fourth indication information from the second communication apparatus, wherein the fourth indication information comprises a type of the first sensing space, and the type of the first sensing space is sensing space that has been detected by the second communication apparatus or sensing space that has not been detected by the second communication apparatus; and
determining the type of the first sensing space based on the fourth indication information.

9. The method according to any one of claims 1 to 8, wherein the method further comprises:
receiving fifth indication information from the second communication apparatus, wherein the fifth indication information comprises one of the following: a traversal manner of the first tree structure and a coding mode of the first information.

10. The method according to any one of claims 1 to 9, wherein the method further comprises:
receiving sixth indication information from the second communication apparatus, wherein the sixth indication information comprises an indication manner of the first tree structure, and the indication manner is a complete indication or a partial indication; and
determining the indication manner of the first tree structure based on the sixth indication information.

11. The method according to claim 10, wherein when the indication manner is the partial indication, the first tree structure comprises α nodes, the α nodes comprise Y first nodes and Z second nodes, all subnodes of the first node need to be fed back, and at least one of subnodes of the second node does not need to be fed back, wherein α, Y, and Z are integers, and Y+Z is less than or equal to α; and
the first information comprises third information indicating the first node or the second node in the α nodes, a node value of the Z second nodes, and a node value of a subnode of the Z second nodes.

12. The method according to any one of claims 1 to 11, wherein the method further comprises:
receiving seventh indication information from the second communication apparatus, wherein the seventh indication information comprises depth information of the first tree structure; and
determining the depth information of the first tree structure based on the seventh indication information.

13. The method according to any one of claims 1 to 12, wherein the method further comprises:
receiving eighth indication information from the second communication apparatus, wherein the eighth indication information comprises a spatial region of the first sensing space, and the spatial region of the first sensing space comprises contour information of the first tree structure; and
determining the spatial region of the first sensing space based on the eighth indication information.

14. The method according to any one of claims 1 to 13, wherein before the receiving first indication information from a second communication apparatus, the method further comprises:
feeding back contour information of an observation region to the second communication apparatus.

15. A space indication method, applied to a second communication apparatus, comprising:
determining first sensing space;
sending first indication information to a first communication apparatus, wherein the first indication information comprises structure information of the first sensing space, and the structure information of the first sensing space comprises first information indicating a first tree structure of the first sensing space; and
receiving feedback information from the first communication apparatus, wherein the feedback information indicates status information sensed by the first communication apparatus in the first sensing space or status information sensed by the first communication apparatus outside the first sensing space.

16. The method according to claim 15, wherein the method further comprises:
sending second indication information to the first communication apparatus, wherein the second indication information comprises feedback configuration information of the first sensing space, and the feedback configuration information comprises at least one of the following: a sensing level of the feedback information, a compression level of the feedback information, and a transmission protection level of the feedback information.

17. The method according to claim 16, wherein the feedback configuration information is indicated by using a second tree structure, and the second tree structure is a sub-structure of the first tree structure.

18. The method according to any one of claims 15 to 17, wherein the method further comprises:
sending third indication information to the first communication apparatus, wherein the third indication information comprises adjustment information, and the adjustment information indicates structure information of second sensing space; and
the adjustment information comprises at least one of the following:
structure information of the second sensing space added relative to that of the first sensing space, and structure information of the second sensing space deleted relative to that of the first sensing space.

19. The method according to any one of claims 15 to 18, wherein the first tree structure comprises one of the following:
an equally divided X-tree or an unequally divided X-tree, wherein X is a positive integer greater than or equal to 2; and
the unequally divided X-tree incompletely equally divides space into X regions, and the equally divided X-tree equally divides space into X regions.

20. The method according to claim 19, wherein the first tree structure is the unequally divided X-tree, and the first indication information further comprises second information indicating a division point of the unequally divided X-tree.

21. The method according to claim 19 or 20, wherein X is 2, 4, 8, or 16.

22. The method according to any one of claims 15 to 21, wherein the method further comprises:
sending fourth indication information to the first communication apparatus, wherein the fourth indication information comprises a type of the first sensing space, and the type of the first sensing space is sensing space that has been detected by the second communication apparatus or sensing space that has not been detected by the second communication apparatus.

23. The method according to any one of claims 15 to 22, wherein the method further comprises:
sending fifth indication information to the first communication apparatus, wherein the fifth indication information comprises one of the following: a traversal manner of the first tree structure and a coding mode of the first information.

24. The method according to any one of claims 15 to 23, wherein the method further comprises:
sending sixth indication information to the first communication apparatus, wherein the sixth indication information comprises an indication manner of the first tree structure, and the indication manner is a complete indication or a partial indication.

25. The method according to claim 24, wherein when the indication manner is the partial indication, the first tree structure comprises α nodes, the α nodes comprise Y first nodes and Z second nodes, all subnodes of the first node need to be fed back, and at least one of subnodes of the second node does not need to be fed back, wherein α, Y, and Z are integers, and Y+Z is less than or equal to α; and
the first information comprises third information indicating the first node or the second node in the α nodes, a node value of the Z second nodes, and a node value of a subnode of the Z second nodes.

26. The method according to any one of claims 15 to 25, wherein the method further comprises:
sending seventh indication information to the first communication apparatus, wherein the seventh indication information comprises depth information of the first tree structure.

27. The method according to any one of claims 15 to 26, wherein the method further comprises:
sending eighth indication information to the first communication apparatus, wherein the eighth indication information comprises a spatial region of the first sensing space, and the spatial region of the first sensing space comprises contour information of the first tree structure.

28. The method according to any one of claims 15 to 27, wherein before the determining first sensing space, the method further comprises:
receiving contour information that is of an observation region and that is fed back by the first communication apparatus; and
the determining first sensing space comprises:
determining the first sensing space of the first communication apparatus based on the contour information that is of the observation region and that is fed back by the first communication apparatus.

29. A communication apparatus, comprising:
a transceiver unit, configured to receive first indication information from a second communication apparatus, wherein the first indication information comprises structure information of first sensing space, and the structure information of the first sensing space comprises first information indicating a first tree structure of the first sensing space; and
a processing unit, configured to determine feedback information based on the tree structure of the first sensing space, wherein the tree structure of the first sensing space is determined based on the first indication information, and the feedback information indicates status information sensed by the first communication apparatus in the first sensing space or status information sensed by the first communication apparatus outside the first sensing space; wherein
the transceiver unit is configured to send the feedback information to the second communication apparatus.

30. The apparatus according to claim 29, wherein the transceiver unit is further configured to:
receive second indication information from the second communication apparatus, wherein the second indication information comprises feedback configuration information of the first sensing space, and the feedback configuration information comprises at least one of the following: a sensing level of the feedback information, a compression level of the feedback information, and a transmission protection level of the feedback information; and
the processing unit is further configured to feed back the feedback information based on the second indication information.

31. The apparatus according to claim 30, wherein the feedback configuration information is indicated by using a second tree structure, and the second tree structure is a sub-structure of the first tree structure.

32. The apparatus according to any one of claims 29 to 31, wherein the transceiver unit is further configured to:
receive third indication information from the second communication apparatus, wherein the third indication information comprises adjustment information, and the adjustment information indicates structure information of second sensing space; and
the adjustment information comprises at least one of the following:
structure information of the second sensing space added relative to that of the first sensing space, and structure information of the second sensing space deleted relative to that of the first sensing space.

33. The apparatus according to any one of claims 29 to 32, wherein the first tree structure comprises one of the following:
an equally divided X-tree or an unequally divided X-tree, wherein X is a positive integer greater than or equal to 2; and
the unequally divided X-tree incompletely equally divides space into X regions, and the equally divided X-tree equally divides space into X regions.

34. The apparatus according to claim 33, wherein the first tree structure is the unequally divided X-tree, and the first indication information further comprises second information indicating a division point of the unequally divided X-tree.

35. The apparatus according to claim 33 or 34, wherein X is 2, 4, 8, or 16.

36. The apparatus according to any one of claims 29 to 35, wherein the transceiver unit is further configured to:
receive fourth indication information from the second communication apparatus, wherein the fourth indication information comprises a type of the first sensing space, and the type of the first sensing space is sensing space that has been detected by the second communication apparatus or sensing space that has not been detected by the second communication apparatus; and
the processing unit is further configured to determine the type of the first sensing space based on the fourth indication information.

37. The apparatus according to any one of claims 29 to 36, wherein the transceiver unit is further configured to:
receive fifth indication information from the second communication apparatus, wherein the fifth indication information comprises one of the following: a traversal manner of the first tree structure and a coding mode of the first information.

38. The apparatus according to any one of claims 29 to 37, wherein the transceiver unit is further configured to:
receive sixth indication information from the second communication apparatus, wherein the sixth indication information comprises an indication manner of the first tree structure, and the indication manner is a complete indication or a partial indication; and
the processing unit is further configured to determine the indication manner of the first tree structure based on the sixth indication information.

39. The apparatus according to claim 38, wherein when the indication manner is the partial indication, the first tree structure comprises α nodes, the α nodes comprise Y first nodes and Z second nodes, all subnodes of the first node need to be fed back, and at least one of subnodes of the second node does not need to be fed back, wherein α, Y, and Z are integers, and Y+Z is less than or equal to α; and
the first information comprises third information indicating the first node or the second node in the α nodes, a node value of the Z second nodes, and a node value of a subnode of the Z second nodes.

40. The apparatus according to any one of claims 29 to 39, wherein the transceiver unit is further configured to:
receive seventh indication information from the second communication apparatus, wherein the seventh indication information comprises depth information of the first tree structure; and
the processing unit is further configured to determine the depth information of the first tree structure based on the seventh indication information.

41. The apparatus according to any one of claims 29 to 40, wherein the transceiver unit is further configured to:
receive eighth indication information from the second communication apparatus, wherein the eighth indication information comprises a spatial region of the first sensing space, and the spatial region of the first sensing space comprises contour information of the first tree structure; and
the processing unit is further configured to determine the spatial region of the first sensing space based on the eighth indication information.

42. The apparatus according to any one of claims 29 to 41, wherein before receiving the first indication information from the second communication apparatus, the transceiver unit is further configured to:
feed back contour information of an observation region to the second communication apparatus.

43. A communication apparatus, comprising:
a processing unit, configured to determine first sensing space; and
a transceiver unit, configured to: send first indication information to a first communication apparatus, wherein the first indication information comprises structure information of the first sensing space, and the structure information of the first sensing space comprises first information indicating a first tree structure of the first sensing space; and receive feedback information from the first communication apparatus, wherein the feedback information indicates status information sensed by the first communication apparatus in the first sensing space or status information sensed by the first communication apparatus outside the first sensing space.

44. The apparatus according to claim 43, wherein the transceiver unit is further configured to:
send second indication information to the first communication apparatus, wherein the second indication information comprises feedback configuration information of the first sensing space, and the feedback configuration information comprises at least one of the following: a sensing level of the feedback information, a compression level of the feedback information, and a transmission protection level of the feedback information.

45. The apparatus according to claim 44, wherein the feedback configuration information is indicated by using a second tree structure, and the second tree structure is a sub-structure of the first tree structure.

46. The apparatus according to any one of claims 43 to 45, wherein the transceiver unit is further configured to:
send third indication information to the first communication apparatus, wherein the third indication information comprises adjustment information, and the adjustment information indicates structure information of second sensing space; and
the adjustment information comprises at least one of the following:
structure information of the second sensing space added relative to that of the first sensing space, and structure information of the second sensing space deleted relative to that of the first sensing space.

47. The apparatus according to any one of claims 43 to 46, wherein the first tree structure comprises one of the following:
an equally divided X-tree or an unequally divided X-tree, wherein X is a positive integer greater than or equal to 2; and
the unequally divided X-tree incompletely equally divides space into X regions, and the equally divided X-tree equally divides space into X regions.

48. The apparatus according to claim 47, wherein the first tree structure is the unequally divided X-tree, and the first indication information further comprises second information indicating a division point of the unequally divided X-tree.

49. The apparatus according to claim 47 or 48, wherein X is 2, 4, 8, or 16.

50. The apparatus according to any one of claims 43 to 49, wherein the transceiver unit is further configured to:
send fourth indication information to the first communication apparatus, wherein the fourth indication information comprises a type of the first sensing space, and the type of the first sensing space is sensing space that has been detected by the second communication apparatus or sensing space that has not been detected by the second communication apparatus.

51. The apparatus according to any one of claims 43 to 50, wherein the transceiver unit is further configured to:
send fifth indication information to the first communication apparatus, wherein the fifth indication information comprises one of the following: a traversal manner of the first tree structure and a coding mode of the first information.

52. The apparatus according to any one of claims 43 to 51, wherein the transceiver unit is further configured to:
send sixth indication information to the first communication apparatus, wherein the sixth indication information comprises an indication manner of the first tree structure, and the indication manner is a complete indication or a partial indication.

53. The apparatus according to claim 52, wherein when the indication manner is the partial indication, the first tree structure comprises α nodes, the α nodes comprise Y first nodes and Z second nodes, all subnodes of the first node need to be fed back, and at least one of subnodes of the second node does not need to be fed back, wherein α, Y, and Z are integers, and Y+Z is less than or equal to α; and
the first information comprises third information indicating the first node or the second node in the α nodes, a node value of the Z second nodes, and a node value of a subnode of the Z second nodes.

54. The apparatus according to any one of claims 43 to 53, wherein the transceiver unit is further configured to:
send seventh indication information to the first communication apparatus, wherein the seventh indication information comprises depth information of the first tree structure.

55. The apparatus according to any one of claims 43 to 54, wherein the transceiver unit is further configured to:
send eighth indication information to the first communication apparatus, wherein the eighth indication information comprises a spatial region of the first sensing space, and the spatial region of the first sensing space comprises contour information of the first tree structure.

56. The apparatus according to any one of claims 43 to 55, wherein before the processing unit determines the first sensing space, the transceiver unit is further configured to receive contour information that is of an observation region and that is fed back by the first communication apparatus; and
the processing unit is configured to determine the first sensing space of the first communication apparatus based on the contour information that is of the observation region and that is fed back by the first communication apparatus.

57. A communication apparatus, comprising at least one processor and a memory, wherein
the memory is configured to store a computer program or instructions; and
the at least one processor is configured to execute the computer program or instructions, so that the method according to any one of claims 1 to 14 or any one of claims 15 to 28 is performed.

58. A chip system, wherein the chip system comprises a processing circuit, and the processing circuit is coupled to a storage medium; and
the processing circuit is configured to execute some or all of computer programs or instructions in the storage medium; and when the some or all of computer programs or instructions are executed, the method according to any one of claims 1 to 14 or any one of claims 15 to 28 is implemented.

59. A computer-readable storage medium, wherein the computer-readable storage medium stores instructions; and when the instructions are executed on a computer, the method according to any one of claims 1 to 14 or any one of claims 15 to 28 is performed.

60. A computer program product comprising a computer program or instructions, wherein when the computer program product is run on a computer, the method according to any one of claims 1 to 14 or any one of claims 15 to 28 is performed.

61. A communication system, comprising the first communication apparatus configured to perform any one of claims 1 to 14 and the second communication apparatus configured to perform any one of claims 15 to 28.
